# EUROPÄISCHE PATENTSCHRIFT

(11) **EP 2 913 481 B1**
(45) Veröffentlichungstag und Bekanntmachung des Hinweises auf die Patenterteilung: **24.04.2019**
(21) Anmeldenummer: 15156112.3
(22) Anmeldetag: 23.02.2015
(51) Int. Cl.: F01D 5/14, F04D 29/32, F04D 29/38, F04D 29/54

(54) **TANDEMSCHAUFEL EINER STRÖMUNGSMASCHINE**
TANDEM BLADES OF A TURBO-MACHINE
AUBES EN TANDEM D'UNE TURBOMACHINE

(30) Priorität: 27.02.2014 DE 102014203601
(43) Veröffentlichungstag der Anmeldung: 02.09.2015
(73) Patentinhaber: Rolls-Royce Deutschland Ltd & Co KG, 15827 Blankenfelde-Mahlow (DE)
(72) Erfinder: Gümmer, Volker, Prof. Dr., 85411 Hohenkammer (DE)
(74) Vertreter: Maikowski & Ninnemann Patentanwälte Partnerschaft mbB

(56) Entgegenhaltungen:
- EP-A1- 2 626 515
- DE-A1-102009 013 399
- US-A1- 2013 209 224
- US-A1- 2013 209 241

## Beschreibung

Die Erfindung betrifft eine Schaufelreihengruppe gemäß dem Oberbegriff des Anspruchs 1.

Die aerodynamische Belastbarkeit und die Effizienz von Strömungsmaschinen, insbesondere Bläsern, Verdichtern, Turbinen, Pumpen und Ventilatoren, wird durch das Wachstum und die Ablösung von Grenzschichten in der Nähe und auf den Naben- und Gehäusewänden begrenzt. Der Stand der Technik hält für den Fall hoher aerodynamischer Belastung und starken Grenzschichtwachstums auf den Ringkanalseitenwänden (Nabe oder Gehäuse) nur bedingt Lösungen bereit.

Stand der Technik in Strömungsmaschinen sind Anordnungen mit doppelreihigen Leiträdern, üblicherweise eingesetzt als Austrittsleitrad in Verdichtern, oder auch doppelreihige Rotoranordnungen, bei denen die Rotoren direkt benachbart gegenläufig operieren oder bei denen zwei direkt benachbarte Rotorschaufelreihen auf einer gemeinsamen Trommel befestigt sind. Eine derartige Strömungsmaschine ist beispielsweise aus der EP 2 261 463 A2 bekannt. Bei diesen Anordnungen, und insbesondere bei denen, die mehrere direkt benachbarte und relativ zueinander fest angeordnete Schaufelreihen aufweisen (also beispielsweise mehrere Rotorschaufelreihen auf der selben Trommel oder mehrere Statorschaufelreihen), ergeben sich bei höherer aerodynamischer Belastung starke Grenzschichtablösung in der Randzone des Hauptströmungspfades, d. h. an der Naben- oder Gehäusekontur.

Die Probleme in den Randbereichen sind primär darauf zurückzuführen, dass die in der Mitte des Hauptströmungspfades günstige Anordnung zweier benachbarter Schaufelkanten einer Schaufelreihengruppe zueinander sich in der Nähe der Strömungspfadberandung ungünstig auswirkt. Auch sind von Einzelschaufelreihen bekannte Entwurfsregeln ungültig. Für Schaufelreihengruppen sind neue Regeln zu erschließen. Insbesondere kann die erforderliche Strömungsumlenkung entweder in Teilen der Schaufelhöhe oder entlang der gesamten Schaufelhöhe schnell so hoch sein, dass die konventionelle Anordnung einer Schaufelreihengruppe zu einer abgelösten Grenzschichtströmung in den Randbereichen des Hauptströmungspfades an Naben- und/oder Gehäusewänden führt.

Aus der US 2013/0209223 A1 ist es bekannt, die meridionale Überlappung zwischen vorderen und hinteren Schaufeln einer Schaufelreihengruppe zwischen der Mitte des Hauptströmungspfades und der Hauptströmungspfadberandung zu variieren. Aus der US 2013/0209224 A1 ist es bekannt, den Grad der Überlappung zwischen vorderen und hinteren Schaufeln einer Schaufelreihengruppe sowie den Abstand benachbarter Kanten der vorderen und hinteren Schaufel zwischen der Mitte des Hauptströmungspfades und der Hauptströmungspfadberandung zu variieren.

Eine Variation der Überlappung und des Abstandes ergibt sich üblicherweise bei jeder Realisierung einer Schaufelreihengruppe, ohne dass dabei zwangsläufig eine vorteilhafte Beeinflussung der Strömung erreicht würde. Die US 2013/0209241 A1 und US 2013/0209224 A1 beschreiben unterschiedlichste Möglichkeiten der Variation, ohne dass dabei aerodynamisch bedeutsame Parameter herangezogen oder dem Ingenieur Bewertungen der möglichen Variationen an die Hand gegeben werden. Eine technische Lehre im Hinblick auf die Festlegung der genauen Gestalt aller Schaufelkanten zweier benachbarter Mitgliedschaufelreihen wird nicht gegeben, obwohl gerade diese von entscheidender Bedeutung für eine günstige Beeinflussung des Gesamtströmungsverhaltens sind. Die US 2013/0209223 A1 behandelt den Kantenabstand benachbarter Mitgliedschaufelreihen in der Meridionalebene (Maschinenseitenansicht). Die Strömungsrichtung in Schaufelreihen verläuft aber mit einer teils erheblichen Strömungsdrallkomponente, sodass die Beschaufelung erheblich gegen die Meridionalrichtung angestellt sein kann. Entscheidend für das aerodynamische Verhalten ist aber eine Festschreibung der Schaufelkanten in einer Ansicht senkrecht und parallel zur Schaufelprofilsehne. Eine in der Meridionalebene sichtbare Schaufelkante kann also durch unendlich viele unterschiedliche in den aerodynamisch relevanten Sehnen- und Sehnenorthogonalrichtungen festgelegte Schaufelkantenformen zustande kommen. Sie kann somit die Gestalt der Schaufelkanten nicht eindeutig beschreiben und demzufolge auch nicht die aeordynamische Problemstellung einer vorteilhaften Strömungsbeeinflussung lösen.

DE 10 2009 013 399 A1 und EP 2 626 515 A1 offenbaren weiteren Beispiele von Schaufelreihengruppen. Der vorliegenden Erfindung liegt die Aufgabe zu Grunde, eine Schaufelreihengruppe bereitzustellen, die durch die Festlegung von Kantenformen und Beziehungen zwischen den Kanten zweier benachbarter Mitgliedschaufelreihen sowohl im mittleren Bereich als auch in den Randbereichen des Hauptströmungspfades ein günstiges Strömungsverhalten realisiert.

Diese Aufgabe wird erfindungsgemäß durch eine Schaufelreihengruppe mit den Merkmalen des Anspruchs 1 gelöst.

Danach stellt die erfindungsgemäße Lösung eine Schaufelreihengruppe bestehend aus mindestens zwei benachbarten und relativ zueinander fest angeordneten Schaufelreihen (mehrere miteinander rotierende Rotorschaufelreihen oder mehrere Statorschaufelreihen) bereit, die in einem Hauptströmungspfad einer Strömungsmaschine anordbar sind. Dabei ist die Vorderkante mindestens einer Schaufel der hinteren Mitgliedsschaufelreihe in der Umgebung einer Schaufel der vorderen Mitgliedsschaufelreihe vorgesehen, wobei gegebenenfalls zwischen der Druckseite der Schaufel und der Saugseite der Schaufel eine Nebenpassage ausgebildet sein kann. Aufgrund der hohen Relevanz der Schaufelkantenformen der beteiligten Schaufeln und der Formen der einzelnen Kanten relativ zueinander für eine günstige Strömungsführung und eine schaufelhöhenabhängige Ausnutzung der Potentialeffekte im aerodynamisch wichtigen Interferenzbereich der beiden Mitgliedschaufelreihen ist erfindungsgemäß vorgesehen, dass im Bereich zwischen der mittleren Meridionalstromlinie SLM (in Hauptströmungspfadmitte) und einer der Hauptströmungspfadberandungen Nabe und Gehäuse in einer definierten Ansicht für wenigstens zwei Kanten der Schaufelreihengruppe bezüglich ihres Kantentyps eine qualitative Gleichheit vorgesehen ist.

Die erfindungsgemäße Lösung ermöglicht eine günstige Strömungsführung und schaufelhöhenabhängige Ausnutzung der Potentialeffekte im aerodynamisch wichtigen Interferenzbereich benachbarter Mitgliedschaufelreihen, indem sie Gemeinsamkeiten mehrerer Schaufelkanten bezüglich ihres Kantentyps vorsieht.

Dabei ist eine qualitative Gleichheit zweier Schaufelkanten dann gegeben, wenn die Schaufelkanten vom selben Kantentyp sind oder spiegelbildlich vom selben Kantentyp sind (d.h. nach Spiegelung einer von zwei betrachteten Kanten die beiden betrachteten Kanten vom selben Kantentyp sind). Dabei sind die Schaufelkanten jeweils einem einer Mehrzahl von Kantentypen zuordbar, die durch die Krümmung des Kantenverlaufs und/oder die Anzahl von Krümmungswechseln der Schaufelkante und/oder den Wölbungsgrad der Schaufelkante definiert sind. Insbesondere werden folgende Kantentypen definiert:
Kantentyp A: es liegt ein im wesentlichen linearer Verlauf vor, mit sehr kleinem Wölbungsgrad von WG < 0,003.
Kantentyp B: es liegt ein schwach gekrümmter Verlauf vor, mit kleinem Wölbungsgrad von 0,003 < WG < 0,01.
Kantentyp C: es liegt ein wenigstens teilweise gekrümmter Verlauf ohne Krümmungswechsel und mit einem Wölbungsgrad von WG > 0,01 und mit einem Abschnitt mit stromaufwärts konkaver Krümmung vor.
Kantentyp D: es liegt ein wenigstens teilweise gekrümmter Verlauf ohne Krümmungswechsel und mit einem Wölbungsgrad von WG > 0,01 und mit einem Abschnitt mit stromaufwärts konvexer Krümmung vor.
Kantentyp E: es liegt ein wenigstens teilweise gekrümmter Verlauf mit einem Krümmungswechsel und mit einem Wölbungsgrad von WG > 0,01 und mit einem Abschnitt zwischen dem Krümmungswechselpunkt und der Hauptströmungspfadberandung HB mit stromaufwärts konkaver Krümmung vor.
Kantentyp F: es liegt ein wenigstens teilweise gekrümmter Verlauf mit einem Krümmungswechsel und mit einem Wölbungsgrad von WG > 0,01 und mit einem Abschnitt zwischen dem Krümmungswechselpunkt und der Hauptströmungspfadberandung HB mit stromaufwärts konvexer Krümmung vor.
Kantentyp G: es liegt ein wenigstens teilweise gekrümmter Verlauf mit zwei Krümmungswechseln und mit einem Wölbungsgrad von WG > 0,01 und mit einem Abschnitt zwischen den beiden Krümmungswechselpunkten mit stromaufwärts konkaver Krümmung vor.
Kantentyp H: es liegt ein wenigstens teilweise gekrümmter Verlauf mit zwei Krümmungswechseln und mit einem Wölbungsgrad von WG > 0,01 und einem Abschnitt zwischen den beiden Krümmungswechselpunkten mit stromaufwärts konvexer Krümmung vor.

Gemäß einer Ausgestaltung der Erfindung ist vorgesehen, dass bei der erfindungsgemäßen Schaufelreihengruppe die Hinterkante der vorderen Schaufel vom Kantentyp D ist. In einer weiteren Ausgestaltung ist vorgesehen, dass die Hinterkante der vorderen Schaufel vom Kantentyp E ist.

Gemäß einer Ausgestaltung der Erfindung ist eine qualitative Gleichheit der mindestens zwei Schaufelkanten VK(i), HK(i), VK(i+1), HK(i+1) an Schaufelkanten unterschiedlicher Schaufelreihen der Schaufelreihengruppe vorgesehen. Dabei kann vorgesehen sein, dass eine qualitative Gleichheit an den vorderen Schaufelkanten VK(i) und VK(i+1) der vorderen und hinteren Schaufel vorgesehen ist, und/oder dass eine qualitative Gleichheit an der hinteren Schaufelkante HK(i) der vorderen Schaufel und der vorderen Schaufelkante VK(i+1) der hinteren Schaufel vorgesehen ist, und/oder dass eine qualitative Gleichheit an den hinteren Schaufelkanten HK(i) und HK(i+1) der vorderen und hinteren Schaufel vorgesehen ist.

Gemäß einer weiteren Ausgestaltung der Erfindung ist eine qualitative Gleichheit der mindestens zwei Schaufelkanten VK(i), HK(i), VK(i+1), HK(i+1) an der selben Schaufelreihe der Schaufelreihengruppe vorgesehen. Dabei kann vorgesehen sein, dass eine qualitative Gleichheit für die Schaufelkanten VK(i) und HK(i) der vorderen Schaufel vorgesehen ist, und/oder dass eine qualitative Gleichheit für die Schaufelkanten VK(i+1) und HK(i+1) der hinteren Schaufel vorgesehen ist.

Weitere Ausgestaltungen der Erfindung sind in den Unteransprüchen angegeben.

Die vorliegende Erfindung bezieht sich auf Schaufeln von Strömungsmaschinen wie Bläser, Verdichter, Pumpen, Ventilatoren und Turbinen axialer, halbaxialer und radialer Bauart mit gasförmigem oder flüssigem Arbeitsmedium. Die Strömungsmaschine kann eine oder mehrere Stufen mit jeweils einem Rotor und einem Stator umfassen, in Einzelfällen wird die Stufe lediglich durch einen Rotor gebildet. Der Rotor besteht aus einer Reihe oder aus mehreren benachbarten und eine Gruppe bildenden Reihen von Schaufeln, die mit der rotierenden Welle der Maschine verbunden sind und Energie mit dem Arbeitsmedium austauschen. Erfindungsgemäß günstig ist eine Anwendung auf Strömungsarbeitsmaschinen, bei denen der Rotor Energie an das Arbeitsmedium abgibt. Der Rotor kann mit Deckband oder mit Laufspalt am äußeren Schaufelende ausgeführt sein. Der Stator besteht aus einer Reihe oder aus mehreren benachbarten und eine Gruppe bildenden Reihen von feststehenden Schaufeln, die nabenseitig wie gehäuseseitig mit einem festen oder einem freien Schaufelende mit Spalt ausgeführt sein können.

Die Rotortrommel und die Beschaufelung sind üblicherweise von einem Gehäuse umgeben, in anderen Fällen, z. B. bei Propellern oder Schiffsschrauben, existiert kein Gehäuse. Die Maschine kann auch einen Stator vor dem ersten Rotor, ein sogenanntes Vorleitrad aufweisen. Mindestens ein Stator oder Vorleitrad kann -abweichend von der unbeweglichen Fixierung- drehbar gelagert sein, um den Anstellwinkel zu verändern. Eine Verstellung erfolgt beispielsweise durch eine von außerhalb des Ringkanals zugängliche Spindel. Alternativ kann die besagte Strömungsmaschine bei Mehrstufigkeit zwei gegenläufige Wellen besitzen, so daß die Rotorschaufelreihen von Stufe zu Stufe die Drehrichtung wechseln. Hierbei existieren keine Statoren zwischen aufeinander folgenden Rotoren. Schließlich kann die Strömungsmaschine alternativ eine Nebenstromkonfiguration derart aufweisen, daß sich der einstromige Ringkanal hinter einer bestimmten Schaufelreihe in zwei konzentrische Ringkanäle aufteilt, die ihrerseits mindestens jeweils eine weitere Schaufelreihe beherbergen.

Die Erfindung wird nachfolgend unter Bezugnahme auf die Figuren der Zeichnung anhand mehrerer Ausführungsbeispiele näher erläutert. Es zeigen:
- Fig. 1:: mehrere Schaufelreihengruppen nach dem Stand der Technik;
- Fig. 2:: die Definition von Meridionalstromlinien;
- Fig. 3:: eine erfindungsgemäße Schaufelreihengruppe mit Umfangsbetrachtung;
- Fig. 4:: erfindungsgemäße Definitionen in einem Meridionalstromlinienschnitt;
- Fig. 5:: erfindungsgemäße Definitionen in der Ansicht B-B aus Fig. 4;
- Fig. 6a:: erfindungsgemäße Schaufelgruppenanordnungen in der Ansicht B-B;
- Fig. 6b:: weitere erfindungsgemäße Schaufelgruppenanordnungen in der Ansicht B-B;
- Fig. 6c:: weitere erfindungsgemäße Schaufelgruppenanordnungen in der Ansicht B-B;
- Fig. 6d:: weitere erfindungsgemäße Schaufelgruppenanordnungen in der Ansicht B-B; und
- Fig. 6e:: weitere erfindungsgemäße Schaufelgruppenanordnungen in der Ansicht B-B.

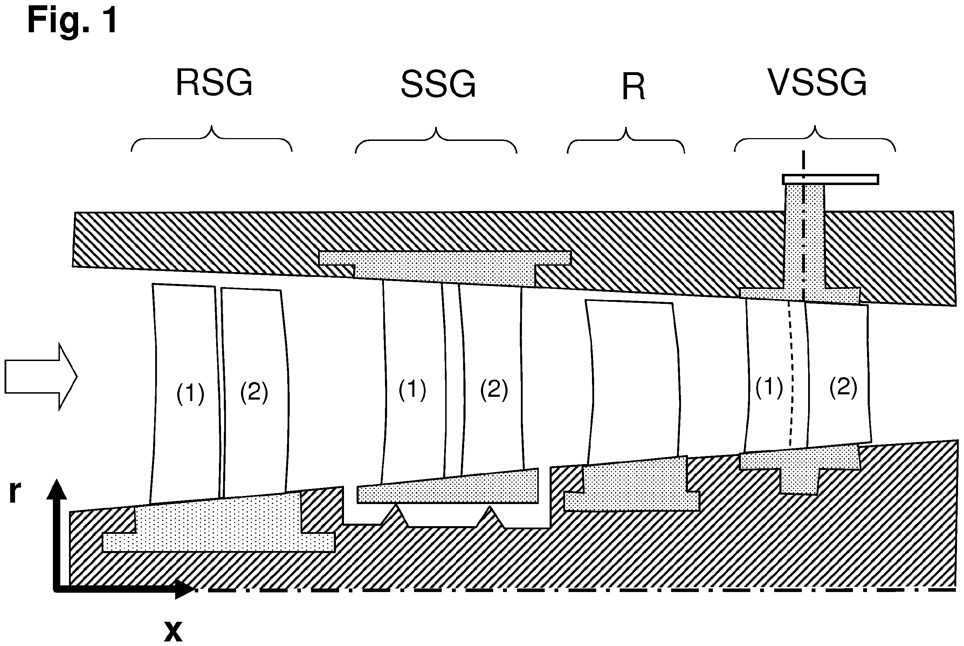

Eine konventionelle Schaufelreihengruppe nach dem Stand der Technik, wie sie in Fig. 1 gezeigt ist, besitzt keine besonderen, die Schaufelkantenform betreffenden Merkmale. Insbesondere eine aus besonderen Relationen zwischen einzelnen Schaufelkanten hervorgehende Sonderform der Schaufelreihengruppe ist nicht gegeben. Es sind keine weiteren Gestaltungsmerkmale gegeben, die aber durch eine komplexere Ausnutzung der Anordnung als Schaufelreihengruppe innovativ entwickelt werden können. Eine Schaufelreihengruppe, wie hier betrachtet, besitzt, anders als eine Einzelschaufelreihe, eine im Verhältnis viel höhere Belastung der Seitenwandgrenzschichten, die durch besondere Zusatzmaßnahmen aufzufangen ist. Eine besondere Schaufelkantenform und Abstimmung der Kanten relativ zueinander im Bereich der Schaufelenden unter der aerodynamischen Sonderwirkung einer Anordnung als Schaufelreihengruppe bietet deshalb einen Weg zu Erweiterung des Betriebsbereiches von Schaufelreihengruppen.

Die Fig. 1 zeigt in der durch die Axialrichtung x und die Radialrichtung r gebildeten Meridionalebene mehrere Schaufelreihengruppen, wobei jede der Schaufelreihengruppen aus jeweils zwei gleichartigen und ihre relative Anordnung zueinander (sowohl in Umfangsrichtung als auch in Meridionalrichtung) nicht ändernden Mitgliedsschaufelreihen besteht. Es handelt sich also um doppelreihige Leiträder oder Laufräder.

So besteht eine Rotorschaufelreihengruppe RSG aus zwei mit gleicher Drehgeschwindigkeit laufenden und miteinander verbundenen Rotorschaufelreihen; das erste Mitglied der Gruppe ist mit (1) und das zweite Mitglied der Gruppe mit (2) gekennzeichnet. Eine Statorschaufelreihengruppe SSG besteht aus zwei direkt benachbarten feststehenden Statorschaufelreihen (1) und (2).

Eine variable Statorschaufelreihengruppe VSSG besteht aus zwei direkt benachbarten Statorschaufelreihen (1) und (2), wobei jeweils eine Schaufel der vorderen Reihe mit einer Schaufel der hinteren Reihe auf einem gemeinsamen Drehteller vorgesehen sind und auf diese Weise gemeinsam um die Drehachse verstellbar sind.

Allen Schaufelreihengruppen nach dem Stand der Technik ist gemeinsam, dass keine gezielt Formgebung der Schaufelkanten und keine vorteilhafte Inbeziehungsetzung der einzelnen Schaufelkantenformen vorgesehen ist. Zudem werden diese üblicherweise in der Meridionalebene (x-r) oder Axialebene (r-u) betrachtet, die keinen Rückschluss auf Eigenschaften in dem aerodynamisch entscheidenden Bezugssystem parallel bzw. senkrecht zur Profilsehne eines Schaufelschnitts zulässt. So können beispielweise zwei sich in der Axialebene (x-r) schneidende Schaufelkanten in sehnenparalleler Ansicht keinen Berühr- oder Schnittpunkt haben. Zudem fehlt im Stand der Technik eine technische Lehre zur Festlegung wichtiger Größen in den für die strömungstechnische Problemstellung relevanten Betrachtungsebenen (parallel bzw. senkrecht zur Profilsehne).

Die Lösungen nach dem Stand der Technik sind entweder aufgrund des Fehlens relevanter Kriterien nicht verwertbar oder sind für die Strömung in der Nähe der Hauptströmungspfadberandung (Nabe oder Gehäuse) nachteilig.

Die genaue erfindungsgemäße Festlegung hat demzufolge in einem profilsehnenrichtungsbezogenen System zu erfolgen. Diese Methode weiter unten im Detail beschrieben. Jede der erfindungsgemäßen Schaufelreihengruppen besteht auch hier aus jeweils zwei gleichartigen und die Relativposition zueinander nicht ändernden Mitgliedsschaufelreihen.

So besteht eine erfindungsgemäße Rotorschaufelreihengruppe RSG aus mindestens zwei mit gleicher Drehgeschwindigkeit laufenden und miteinander verbundenen Rotorschaufelreihen. Eine erfindungsgemäße Statorschaufelreihengruppe SSG besteht aus mindestens zwei direkt benachbarten feststehenden Statorschaufelreihen.

Eine erfindungsgemäße variable Statorschaufelreihengruppe VSSG besteht aus mindestens zwei direkt benachbarten Statorschaufelreihen. Eine Schaufel einer der Mitgliedsschaufelreihen kann mit mindestens einer Schaufel der ihr unmittelbar stromab liegenden Mitgliedsschaufelreihe auf einem gemeinsamen Drehteller vorgesehen. Alternativ können aber auch mindestens zwei, unterschiedlichen Mitgliedschaufelreihen zugehörige, Schaufeln je auf einem individuellen Drehteller angeordnet sein.

Jede der erfindungsgemäßen Schaufelreihengruppen RSG, SSG und VSSG können auch mehr als zwei Mitgliedsschaufelreihen besitzen.

Die beschriebene Konfiguration der Schaufelreihengruppe schließt die Möglichkeit ein, dass an mindestens einer Mitgliedsschaufelreihe der Abstand zwischen zwei benachbarten Schaufeln entlang des Umfangs variiert. Es kann auch günstig sein, wenn die axiale Position zweier benachbarter Schaufeln dieser Schaufelreihe entlang des Umfangs variiert. Es kann auch günstig sein, wenn die Profiltiefe zweier benachbarter Schaufeln dieser Schaufelreihe entlang des Umfangs variiert.

Es kann vorteilhaft sein, wenn die Anzahl der Schaufeln zweier benachbarter Mitgliedsschaufelreihen in einem besonderen Verhältnis stehen, das heißt, dass die Anzahl der Schaufeln der Mitgliedsschaufelreihe (i) ein Vielfaches der Anzahl der Schaufeln der Mitgliedsschaufelreihe (i+1) bildet, oder die Anzahl der Schaufeln der Mitgliedsschaufelreihe (i+1) ein Vielfaches der Anzahl der Schaufeln der Mitgliedsschaufelreihe (i) bildet, oder die Anzahl der Schaufeln der Mitgliedsschaufelreihe (i) und die Anzahl der Schaufeln der Mitgliedsschaufelreihe (i+1) gleich sind. Besonders vorteilhaft kann es sein, wenn das Verhältnis der Schaufelzahlen der Reihen (i) und (i+1) im Verhaltnis von 1:2 steht.

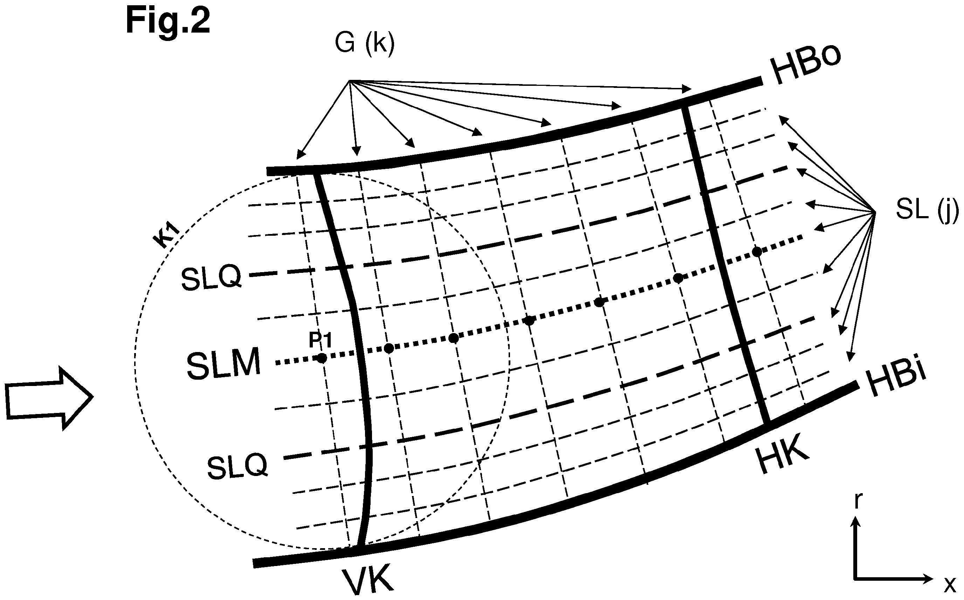

Zum Zweck der Vorbereitung von erfindungsgemäß wichtigen Definitionen zeigt die Fig. 2 zur Definition von Meridionalstromlinien einen Hauptströmungspfad einer Strömungsmaschine mit Durchströmung von links nach rechts (angezeigt durch den dicken Pfeil), in der durch die Axialkoordinate x und die Radialkoordinate r gebildeten Meridionalebene, wobei der Hauptströmungspfad durch die radial inneren Hauptströmungspfadberandung HBi und die radial äußere Hauptströmungspfadberandung HBo begrenzt wird. Mittig zwischen der radial inneren Hauptströmungspfadberandung HBi und der radial äußeren Hauptströmungspfadberandung HBo ist die mittlere Meridionalstromlinie SLM gegeben. Ihr Verlauf entspricht der Verbindung der Mittelpunkte dem Hauptströmungspfad einbeschriebener Kreise, wie im Bild für den ersten markierten Punkt P1 auf der mittleren Meridionalstromlinie SLM und den zugehörigen Kreis K1 beispielhaft verdeutlicht wird. VK und HK bezeichnen die Vorderkante und die Hinterkante einer im Hauptströmungspfad angeordneten Schaufel.

Eine Schar von Geraden G(k) ist innerhalb des Hauptströmungspfades gegeben, deren Mitglieder jeweils senkrecht auf der mittleren Meridionalstromlinie SLM stehen und an den Hauptströmungspfadberandungen HB enden. Weitere Meridionalstromlinien SL(j) sind durch die Verbindung von Punkten bei jeweils gleicher prozentualer Unterteilung der Geraden G(k) zwischen den Hauptströmungspfadberandungen HB definiert.

Die Rotation einer Meridionalstromlinie um die Maschinenachse ergibt eine Meridionalstromfläche SF(j). Der Schnitt einer Meridionalstromfläche mit einer Schaufel der Strömungsmaschine ergibt einen Meridionalstromlinienschnitt SLS(j). Mittig zwischen einer der Hauptströmungspfadberandungen HBi und HBo und der mittleren Meridionalstromlinie SLM ergibt sich auf diese Weise jeweils die Viertelmeridionalstromlinie SLQ.

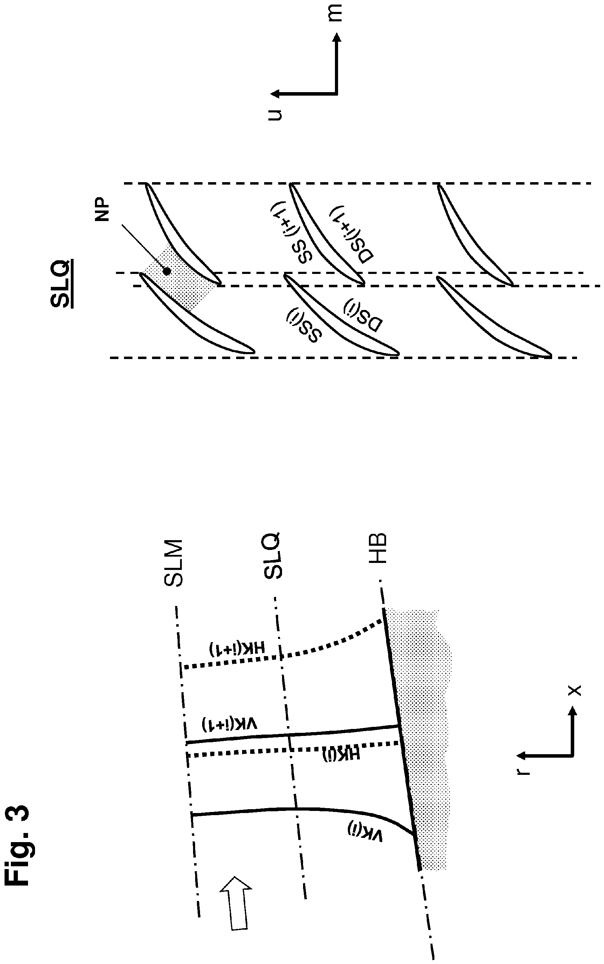

Es kann sich, je nach Schaufelform ergeben, dass die Profiltiefen und Schaufelkantenformen in der Meridionalebene (x,r) nicht oder nicht quantitativ erfassbar sind. Deshalb ist für erfindungsmäße Festlegungen die Betrachtung in einem profilsehnenrichtungsbezogenen Koordinatensystem vorzunehmen. Dazu zeigt die Fig. 3 zunächst auf ihrer linken Seite beispielhaft eine Anordnung von zwei zu einer erfindungsgemäßen Schaufelreihengruppe gehörenden und benachbarten Mitgliedsschaufelreihen (i) und (i+1) in der durch die Axialrichtung x und die Radialrichtung r gebildeten Meridionalebene. Dargestellt ist die erfindungsgemäße Anordnung im Bereich zwischen der Hauptströmungspfadmitte (mittlere Meridionalstromlinie SLM, entlang der dortigen Meridionalrichtung m), und einer Hauptströmungspfadberandung HB. Die Hauptströmungspfadberandung HB stellt eine Kontur an der Nabe oder am Gehäuse der Strömungsmaschine dar, zum Beispiel an einem Drehteller, einer Wandung, einem Statorfuß, einem Statordeckband, einem Rotorfuß oder einem Rotordeckband.

Die Hauptströmungspfadberandung HB ist entweder fest mit dem Ende mindestens einer Mitgliedsschaufelreihe verbunden, oder es ist ein Spalt zwischen der Hauptströmungspfadberandung und mindestens dem Ende einer Mitgliedsschaufelreihe vorgesehen.

Die Anordnung zeigt die zwei Mitgliedsschaufelreihen (i) und (i+1), mit jeweils zwei Schaufelkanten, Vorderkante VK(i) und Hinterkante HK(i) beziehungweise Vorderkante VK(i+1) und Hinterkante HK(i+1).

Die rechte Seite der Fig. 3 zeigt die Anordnung der betrachteten zwei Mitgliedsschaufelreihen in einer von der Meridionalkoordinate m und der Umfangsrichtung u gebildeten Meridionalstromfläche. Eine entsprechende Umfangsabwicklung ist beispielhaft für andere Meridionalstromlinienschnitte am mittleren Meridionalstromlinienschaufelschnitt SLM in Hauptströmungspfadmitte dargestellt. Der Einfachheit halber (aber erfindungsgemäß nicht zwingend nötig) besitzen hier die beiden Mitgliedschaufelreihen gleiche Schaufelanzahlen. Vorteilhaft ist ebenfalls ein Schaufelanzahlverhältnis der Reihen (i) und (i+1) von 1:2, wobei jede zweite Schaufel der Reihe (i+1) vorteilhaft nahe der Druckseite einer Schaufel der Reihe (i) angeordnet sein kann. Die Saugseiten der Schaufeln (i) und (i+1) sind jeweils mit SS(i) und SS(i+1) und die Druckseiten mit DS(i) und DS(i+1) gekennzeichnet.

Die Schaufeln können günstigerweise so vorgesehen sein, dass zwischen der Druckseite einer Schaufel (i) und der Saugseite einer Schaufel (i+1) eine Nebenpassage (dargestellt als schattierte Fläche und gekennzeichnet mit NP) ausgebildet ist.

Es kann vorgesehen sein, dass in wenigstens einem Bereich der Hauptströmungspfadhöhe von der Vorderkante VK(i+1) der hinteren Mitgliedsschaufelreihe zur Hinterkante HK(i) der vorderen Mitgliedsschaufelreihe ein meridionaler Eingriff vorgesehen ist, dessen Betrag in Richtung mindestens einer der Hauptströmungspfadberandungen HB in wenigstens einem Teilabschnitt zunimmt. Ein solcher meridionaler Eingriff kann bei sämtlichen Ausführungsbeispielen der Erfindung vorgesehen sein.

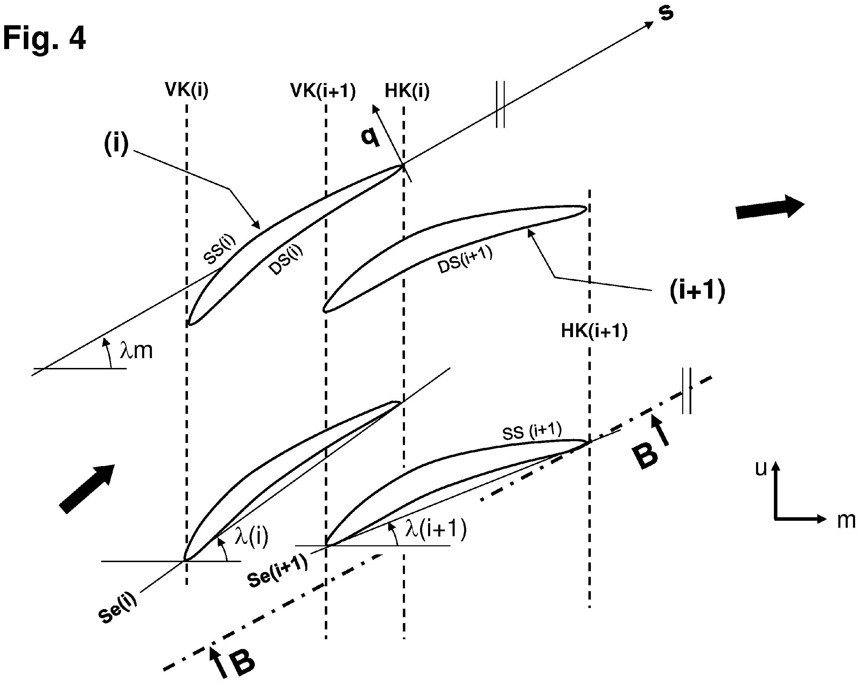

Die Fig. 4 zeigt, wie die rechte Seite der Fig. 3, einen Meridionalstromlinienschaufelschnitt. Es sind die Definition verschiedener relevanter Größen und Ansichten in der durch die Meridionalrichtung m und die Umfangskoordinate u gegebenen Ebene gegeben. Zur Vereinfachung sind nur jeweils 2 Schaufeln und die jeweils dazwischen liegende Schaufelhauptpassage der Mitgliedsschaufelreihen (i) und (i+1) dargestellt. Die Hauptströmungsrichtung ist durch dicke schwarze Pfeile gekennzeichnet. Die Verbindungslinien der Schaufelkanten sind entsprechend mit VK(i), HK(i), VK(i+1) und HK(i+1) gekennzeichnet. Jedes Schaufelprofil ist mit seiner Saugseite SS, seiner Druckseite DS dargestellt. Es wird darauf hingewiesen, dass zu Zwecken einer übersichtlichen Darstellung in der Fig. 4 und auch in den anderen Figuren zwischen der Bezeichnung der Mitgliedsschaufelreihen (i) und (i+1) und der Bezeichnung der einzelnen Schaufeln der Mitgliedsschaufelreihen nicht unterschieden wird, d.h. die Schaufeln sind ebenfalls mit (i) und (i+1) bezeichnet.

Die Sehne der vorderen Schaufel Se(i) ist definiert als die druckseitig an das Profil der Schaufel (i) angelegte Tangente. Die Sehne der hinteren Schaufel Se(i+1) ist definiert als die druckseitig an das Profil der Schaufel (i+1) angelegte Tangente.

Der Staffelungswinkel der vorderen Schaufel lambda(i) (λi) ist definiert als der Neigungswinkel der Sehne der vorderen Schaufel S(i) gegen die Meridionalrichtung m. Der Staffelungswinkel der hinteren Schaufel lambda(i+1) (λi+1) ist definiert als der Neigungswinkel der Sehne der hinteren Schaufel S(i+1) gegen die Meridionalrichtung m. Der mittlere Staffelungswinkel lambdam (Am) ist definiert als Mittelwert der Staffelungswinkel lambda(i) und lambda(i+1) gemäß: lambdam= (lambda(i)+lambda(i+1)) / 2.

Die Koordinatenrichtung s ist mit lambdam gegen die Meridionalrichtung m geneigt und zeigt stromabwärts. Die Koordinatenrichtung q steht senkrecht auf s und ist weggehend von der Druckseite der Schaufel (i) orientiert. Die Koordinatenrichtung or steht senkrecht auf s und q.

Für die Definition der Ansicht B-B wird davon ausgegangen, dass der in Fig.4 dargestellte Meridionalstromlinienschaufelschnitt sich an der Viertelmeridionalstromlinie SLQ befindet. Die durch die dortige Koordinatenrichtung s gekennzeichnete mittlere Sehnenrichtung ist repräsentativ für die örtliche Hauptströmungsrichtung im strömungsmechanischen Interferenzbereich der Schaufeln (i) und (i+1). Daher ist ein fester Bezug zu dieser aerodynamisch ausgewiesenen und bedeutsamen mittleren Sehnenrichtung essentiell für eine strömungsmechanisch treffende Festlegung von Ausprägungsmerkmalen einer Schaufelreihengruppe. Die Schaufelkanten und deren beschreibende Parameter werden aus diesem Grunde im Koordinatensystem (s-q) der mittleren Sehnenrichtung s und ihrer Orthogonalen q (tangential an die zu SLQ gehörenden Meridionalstromfläche) definiert. In der Ansicht B-B können alle Schaufelkanten einer Schaufelreihenpaarung (i), (i+1) hinsichtlich ihrer strömungsmechanischen Wirkung sinnvoll beurteilt und beschrieben werden.

Die Ansicht B-B erfolgt tangential zur Mittelschnittsmeridionalstromfläche (Kegelfläche um die Maschinenachse) und senkrecht zu der durch die Koordinatenrichtung s gekennzeichneten mittleren Sehnenrichtung der Schaufelanordnung im Meridionalstromlinienschaufelschnitt bei SLQ.

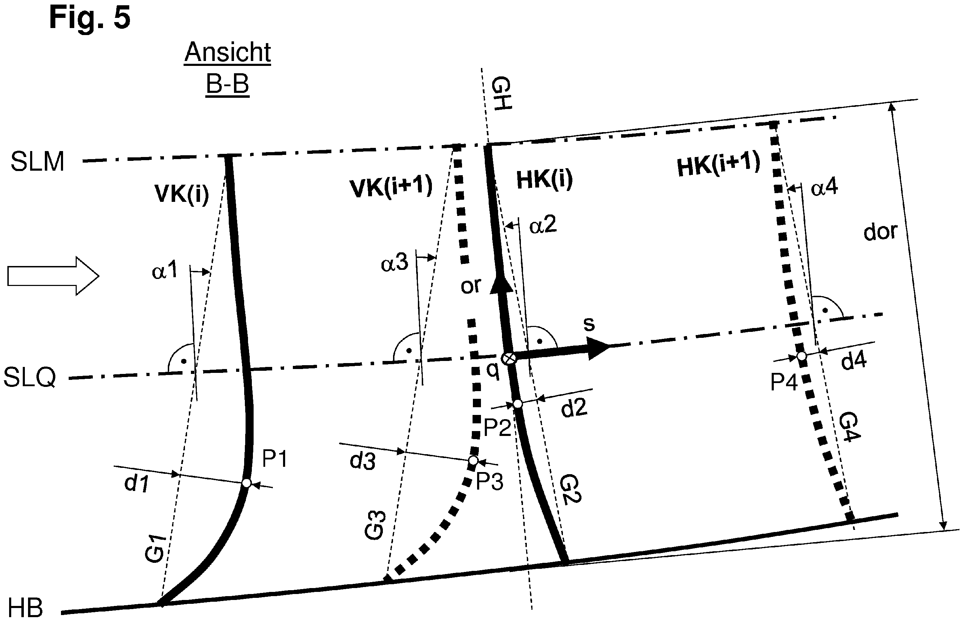

Die Fig. 5 zeigt als dicke durchgezogene Linien die Kanten der vorderen Schaufel und als dicke gepunktete Linien die Kanten der hinteren Schaufel im Bereich zwischen der Hauptströmungspfadberandung HB und der bei halber Schaufelhöhe definierten mittleren Meridionalstromlinie SLM, in der s-or-Ebene (Ansicht B-B). Zudem ist die Viertelmeridionalstromlinie SLQ eingezeichnet, wobei der Koordinatenursprung im Schnittpunkt von SLQ mit der Hinterkante der vorderen Schaufel HK(i) angeordnet ist, die Koordinatenrichtung or orthogonal zu der durch SLQ verlaufenden Meridionalstromfläche gegeben ist. Die Koordinatenrichtung s verläuft parallel zu SLQ. Die Koordinatenrichtung or verläuft orthogonal zu SLQ und ist nicht zwingend parallel zu HK(i). Die Hauptströmungsrichtung ist durch einen dicken Pfeil gekennzeichnet.

Mit Hilfe der vier Hilfsgeraden G1, G2, G3 und G4 werden wichtige beschreibende Parameter für die Schaufelkanten der Mitgliedschaufelreihen (i) und (i+1) definiert. Eine Hilfsgerade verläuft jeweils durch die Schnittpunkte einer Schaufelkante mit der mittleren Merdionalstromlinie SLM und der Hauptströmungspfadberandung HB: G1 für die Kante VK(i), G2 für die Kante HK(i), G3 für die Kante VK(i+1) und G4 für die Kante HK(i+1).

Die Distanz dor zwischen SLM und HB wird orthogonal zur Viertelmeridionalstromlinie SLQ im Schnittpunkt mit der Hinterkantenlinie HK(i) (in Richtung von or und senkrecht zu s) gemessen, wobei die Hilfsgerade GH die SLQ-Orthogonalenrichtung ausweist.

Der Wölbungsgrad WG1 der Vorderkantenlinie VK(i) ist als größter feststellbarer Abstand d1 zwischen der Vorderkantenlinie VK(i) selbst und der Hilfsgeraden G1 (maximale Wölbung d1) bezogen auf die Distanz dor definiert, gemäß WG1 = d1 / dor.

Der Kippwinkel alpha1 der Vorderkantenlinie VK(i) ist zwischen der Hilfsgeraden G1 und der Orthogonalen der Viertelmeridionalstromlinie SLQ im Schnittpunkt mit der Hilfsgeraden G1 definiert und wird bei Betrachtung der Schaufelreihengruppe, mit einer Durchströmung von links nach recht und der Hauptströmungspfadberandung HB als bildlich unterer Begrenzung, im Urzeigersinn positiv gezählt. Der Punkt maximaler Kantenwölbung auf der Vorderkantenlinie VK(i) ist als P1 gekennzeichnet.

Der Wölbungsgrad WG2 der Hinterkantenlinie HK(i) ist als größter feststellbarer Abstand d2 zwischen der Vorderkantenlinie HK(i) selbst und der Hilfsgeraden G2 (maximale Wölbung d2) bezogen auf die Distanz dor definiert, gemäß WG2 = d2 / dor.

Der Kippwinkel alpha2 der Hinterkantenlinie HK(i) ist zwischen der Hilfsgeraden G2 und der Orthogonalen der Viertelmeridionalstromlinie SLQ im Schnittpunkt mit der Hilfsgeraden G2 definiert und wird bei Betrachtung der Schaufelreihengruppe, mit einer Durchströmung von links nach recht und der Hauptströmungspfadberandung HB als bildlich unterer Begrenzung, im Urzeigersinn positiv gezählt. Der Punkt maximaler Kantenwölbung auf der Hinterkantenlinie HK(i) ist als P2 gekennzeichnet.

Der Wölbungsgrad WG3 der Vorderkantenlinie VK(i+1) ist als größter feststellbarer Abstand d3 zwischen der Vorderkantenlinie VK(i+1) selbst und der Hilfsgeraden G3 (maximale Wölbung d3) bezogen auf die Distanz dor definiert,gemäß WG3 = d3 / dor.

Der Kippwinkel alpha3 der Vorderkantenlinie VK(i+1) ist zwischen der Hilfsgeraden G3 und der Orthogonalen der Viertelmeridionalstromlinie SLQ im Schnittpunkt mit der Hilfsgeraden G3 definiert und wird bei Betrachtung der Schaufelreihengruppe, mit einer Durchströmung von links nach recht und der Hauptströmungspfadberandung HB als bildlich unterer Begrenzung, im Urzeigersinn positiv gezählt. Der Punkt maximaler Kantenwölbung auf der Vorderkantenlinie VK(i+1) ist als P3 gekennzeichnet.

Der Wölbungsgrad WG4 der Hinterkantenlinie HK(i+1) ist als größter feststellbarer Abstand d4 zwischen der Vorderkantenlinie HK(i+1) selbst und der Hilfsgeraden G4 (maximale Wölbung d4) bezogen auf die Distanz dor definiert, gemäß WG4 = d4 / dor.

Der Kippwinkel alpha4 der Hinterkantenlinie HK(i) ist zwischen der Hilfsgeraden G4 und der Orthogonalen der Viertelmeridionalstromlinie SLQ im Schnittpunkt mit der Hilfsgeraden G4 definiert und wird bei Betrachtung der Schaufelreihengruppe, mit einer Durchströmung von links nach rechts und der Hauptströmungspfadberandung HB als bildlich unterer Begrenzung, im Urzeigersinn positiv gezählt. Der Punkt maximaler Kantenwölbung auf der Hinterkantenlinie HK(i+1) ist als P4 gekennzeichnet.

Die Schaufelkanten werden hinsichtlich ihrer qualitativen Form in unterschiedliche Kantentypen unterteilt:
Kantentyp A: ein im wesentlichen linearer Verlauf, dadurch gekennzeichnet, dass ein sehr kleiner Wölbungsgrad von WG < 0,003 vorgesehen ist. Kantentyp B: ein schwach gekrümmter Verlauf, dadurch gekennzeichnet, dass ein kleiner Wölbungsgrad von 0,003 < WG < 0,01 vorgesehen ist. Kantentyp C: ein wenigstens teilweise gekrümmter Verlauf ohne Krümmungswechsel und mit einem Wölbungsgrad von WG > 0,01, wobei ein Abschnitt mit einer zur Schaufeldruckseite hin konkaven Krümmung vorgesehen ist. Kantentyp D: ein wenigstens teilweise gekrümmter Verlauf ohne Krümmungswechsel und mit einem Wölbungsgrad von WG > 0,01, wobei ein Abschnitt mit einer zur Schaufeldruckseite hin konvexen Krümmung vorgesehen ist (spiegelbildlich qualitativ gleich mit Typ C). Kantentyp E: ein wenigstens teilweise gekrümmter Verlauf mit einem Krümmungswechsel und mit einem Wölbungsgrad von WG > 0,01, wobei zwischen dem Krümmungswechselpunkt und der Hauptströmungspfadberandung HB ein Abschnitt mit einer zur Schaufeldruckseite hin konkaven Krümmung vorgesehen ist.

Kantentyp F: ein wenigstens teilweise gekrümmter Verlauf mit einem Krümmungswechsel und mit einem Wölbungsgrad von WG > 0,01, wobei zwischen dem Krümmungswechselpunkt und der Hauptströmungspfadberandung HB ein Abschnitt mit einer zur Schaufeldruckseite hin konvexen Krümmung vorgesehen ist (spiegelbildlich qualitativ gleich mit Typ E). Kantentyp G: ein wenigstens teilweise gekrümmter Verlauf mit zwei Krümmungswechseln und mit einem Wölbungsgrad von WG > 0,01, wobei zwischen den beiden Krümmungswechselpunkten ein Abschnitt mit einer zur Schaufeldruckseite hin konkaven Krümmung vorgesehen ist. Kantentyp H: ein wenigstens teilweise gekrümmter Verlauf mit zwei Krümmungswechseln und mit einem Wölbungsgrad von WG > 0,01, wobei zwischen den beiden Krümmungswechselpunkten ein Abschnitt mit einer zur Schaufeldruckseite hin konvexen Krümmung vorgesehen ist (spiegelbildlich qualitativ gleich mit Typ G).

Eine qualitative Gleichheit zweier Kanten ist gegeben, wenn sie entweder vom selben Typ sind (auch als gleichsinnig qualitative Gleichheit bezeichnet) oder wenn zwei Kanten unterschiedlichen Typs sind, aber spiegelbildlich auseinander hervorgehen, z.B. Typen C und D, oder Typen E und F, oder Typen G und H (auch als gegensinnig qualitative Gleichheit bezeichnet).

Die Fig.5 zeigt eine Darstellung der Schaufelkanten in der Ansicht B-B, die den Idealfall für eine Betrachtung der Schaufelkanten repräsentiert, doch können auch Festlegungen in davon in Maßen abweichenden Ansichten der Schaufelreihenpaarung mit ihren vier Kanten innerhalb eines Winkelbereiches von +/-45° um die Koordinatenrichtung q sachdienlich sein, solange diese orthogonal zur Koordinatenrichtung or gegeben ist. Dabei ist es besonders sachdienlich, wenn die Kanten der Schaufelreihengruppe in einer ansicht orthogonal zu den Koordinatenrichtungen s und or betrachtet werden.

Es ist erfindungsgemäß günstig, wenn wenigstens zwei der vier Schaufelkanten der Schaufelreihenpaarung (i, i+1) bezüglich ihres Kantentyps eine qualitative Gleichheit aufweisen. Dabei kann es vorteilhaft sein, wenn eine gleichsinnige qualitative Gleichheit vorgesehen ist.

Es kann weiterhin vorteilhaft für die Schaufelreihengruppe sein, wenn eine qualitative Gleichheit für wenigstens drei der vier Schaufelkanten der Schaufelreihenpaarung (i, i+1) vorgesehen ist. Dabei kann es vorteilhaft sein, wenn eine gleichsinnige qualitative Gleichheit vorgesehen ist.

Es kann weiterhin vorteilhaft für die Schaufelreihengruppe sein, wenn eine qualitative Gleichheit für alle vier Schaufelkanten der Schaufelreihenpaarung (i, i+1) vorgesehen ist. Dabei kann es vorteilhaft sein, wenn eine gleichsinnige qualitative Gleichheit vorgesehen ist.

Es kann weiterhin vorteilhaft für die Schaufelreihengruppe sein, wenn eine qualitative Gleichheit für die Schaufelkanten HK(i) und VK(i+1) vorgesehen ist. Dabei kann es vorteilhaft sein, wenn eine gleichsinnige qualitative Gleichheit vorgesehen ist. Alternativ kann es vorteilhaft sein, wenn eine gegensinnige qualitative Gleichheit vorgesehen ist d.h. die Schaufelkanten spiegelbildlich auseinander hervorgehen.

Es kann weiterhin vorteilhaft für die Schaufelreihengruppe sein, wenn eine qualitative Gleichheit für die Schaufelkanten VK(i) und VK(i+1) vorgesehen ist. Dabei kann es vorteilhaft sein, wenn eine gleichsinnige qualitative Gleichheit vorgesehen ist.

Es kann weiterhin vorteilhaft für die Schaufelreihengruppe sein, wenn eine qualitative Gleichheit für die Schaufelkanten HK(i) und HK(i+1) vorgesehen ist. Dabei kann es vorteilhaft sein, wenn eine gleichsinnige qualitative Gleichheit vorgesehen ist.

Es kann weiterhin vorteilhaft für die Schaufelreihengruppe sein, wenn eine qualitative Gleichheit für die Schaufelkanten VK(i) und HK(i+1) vorgesehen ist. Dabei kann es vorteilhaft sein, wenn eine gleichsinnige qualitative Gleichheit vorgesehen ist. Alternativ kann es vorteilhaft sein, wenn eine gegensinnige qualitative Gleichheit vorgesehen ist.

Es kann weiter vorteilhaft sein, wenn eine qualitative Gleichheit von Schaufelkanten in der Ansicht B-B senkrecht zu den Koordinatenrichtungen s und or vorgesehen ist. Dabei kann es vorteilhaft sein, wenn eine gleichsinnige qualitative Gleichheit vorgesehen ist.

Es ist günstig, wenn in der Ansicht B-B an wenigstens einer der Kanten VK(i) und VK(i+1) einer der Kantentypen A, B, C, E und H vorgesehen ist. Dabei ist es vorteilhaft, wenn einer der Kantentypen C, E und H vorgesehen ist. Dabei ist es zusätzlich vorteilhaft, wenn ein Kantentyp C oder alternativ ein Kantentyp E vorgesehen ist. Dabei ist es besonders vorteilhaft, wenn an beiden Kanten VK(i) und VK(i+1) ein Kantentyp E vorgesehen ist.

Es ist günstig, wenn in der Ansicht B-B, an wenigstens einer der Kanten VK(i) und VK(i+1) einer der Kantentypen F und G vorgesehen ist. Dabei ist es vorteilhaft, wenn ein Kantentyp F vorgesehen ist. Dabei ist es besonders vorteilhaft, wenn an beiden Kanten VK(i) und VK(i+1) ein Kantentyp F vorgesehen ist.

Es ist günstig, wenn in der Ansicht B-B, an wenigstens einer der Kanten HK(i) und HK(i+1) einer der Kantentypen A, B, D, E und H vorgesehen ist. Dabei ist es vorteilhaft, wenn einer der Kantentypen B, D und E vorgesehen ist. Dabei ist es zusätzlich vorteilhaft, wenn ein Kantentyp D oder alternativ ein Kantentyp E vorgesehen ist. Dabei ist es besonders vorteilhaft, wenn an beiden Kanten HK(i) und HK(i+1) ein Kantentyp E vorgesehen ist.

Es ist günstig, wenn in der Ansicht B-B, an wenigstens einer der Kanten HK(i) und HK(i+1) einer der Kantentypen C, F und G vorgesehen ist. Dabei ist es vorteilhaft, wenn einer der Kantentypen C und F vorgesehen ist. Dabei ist es zusätzlich vorteilhaft, wenn ein Kantentyp C vorgesehen ist. Dabei ist es besonders vorteilhaft, wenn an beiden Kanten HK(i) und HK(i+1) ein Kantentyp C vorgesehen ist.

Es ist günstig, wenn in der Ansicht B-B, an der Kante VK(i+1) der Kantentyp C und an der Kante HK(i) einer der Kantentypen A, B, C, D, E und F vorgesehen ist. Dabei ist es vorteilhaft, wenn an der Kante HK(i) ein Kantentyp D oder E vorgesehen ist.

Es ist günstig, wenn in der Ansicht B-B, an der Kante VK(i+1) der Kantentyp E und an der Kante HK(i) einer der Kantentypen A, B, C, D, E und F vorgesehen ist. Dabei ist es vorteilhaft, wenn an der Kante HK(i) ein Kantentyp C oder F vorgesehen ist.

Es ist günstig, wenn in der Ansicht B-B, an der Kante VK(i+1) der Kantentyp F und an der Kante HK(i) einer der Kantentypen A, B, C, D, E und F vorgesehen ist. Dabei ist es vorteilhaft, wenn an der Kante HK(i) ein Kantentyp E oder F vorgesehen ist.

Neben den im voranstehenden Text beschriebenen Kantenformtypen spielt für die Kantentypen mit wenigstens einem Krümmungswechsel die Position des Krümmungswechsels eine Rolle für die günstige Beeinflussung der Strömung im Bereich nahe der Hauptströmungspfadberandung.

Es ist günstig, wenn in der Ansicht B-B der Punkt des Krümmungswechsels wenigstens einer der Schaufelkanten VK(i), HK(i), VK(i+1) und HK(i+1) im Bereich zwischen der Viertelmeridionalstromlinie SLQ und der Hauptströmungspfadberandung HB vorgesehen ist. Dabei ist es vorteilhaft, wenn der Punkt des Krümmungswechsels näher an der SLQ als an der HB vorgesehen ist.

Es ist günstig, wenn in der Ansicht B-B der Punkt des Krümmungswechsels für wenigstens die Vorderkanten VK(i) und VK(i+1) oder die Hinterkanten HK(i) und HK(i+1) im Bereich zwischen der Viertelmeridionalstromlinie SLQ und der Hauptströmungspfadberandung HB vorgesehen ist. Dabei ist es vorteilhaft, wenn der Punkt des Krümmungswechsels näher an der SLQ als an der HB vorgesehen ist.

Es ist günstig, wenn in der Ansicht B-B der Punkt des Krümmungswechsels aller Schaufelkanten VK(i), HK(i), VK(i+1) und HK(i+1) im Bereich zwischen der Viertelmeridionalstromlinie SLQ und der Hauptströmungspfadberandung HB vorgesehen ist. Dabei ist es vorteilhaft, wenn der Punkt des Krümmungswechsels näher an der SLQ als an der HB vorgesehen ist.

Es kann weiterhin günstig sein, wenn in der Ansicht B-B der Punkt des Krümmungswechsels wenigstens einer der Schaufelkanten VK(i), HK(i), VK(i+1) und HK(i+1) näher an der HB als an der SLQ vorgesehen ist. Dabei ist es vorteilhaft, wenn dies für wenigstens eine der Vorderkanten VK(i) und VK(i+1) zutrifft.

Es kann weiterhin günstig sein, wenn in der Ansicht B-B der Punkt des Krümmungswechsels für wenigstens die Vorderkanten VK(i) und VK(i+1) oder die Hinterkanten HK(i) und HK(i+1) näher an der HB als an der SLQ vorgesehen ist. Dabei ist es vorteilhaft, wenn dies für die Vorderkanten VK(i) und VK(i+1) zutrifft.

Es kann weiterhin günstig sein, wenn in der Ansicht B-B der Punkt des Krümmungswechsels aller Schaufelkanten VK(i), HK(i), VK(i+1) und HK(i+1) näher an der HB als an der SLQ vorgesehen ist.

Es kann unter baulichen Einschränkungen auch günstig sein, wenn in der Ansicht B-B der Punkt des Krümmungswechsels wenigstens einer der Schaufelkanten VK(i), HK(i), VK(i+1) und HK(i+1) im Bereich zwischen der Viertelmeridionalstromlinie SLQ und der mittleren Meridionalstromlinie SLM vorgesehen ist. Dabei ist es vorteilhaft, wenn der Punkt des Krümmungswechsels näher an der SLQ als an der SLM vorgesehen ist.

Es kann unter baulichen Einschränkungen weiterhin günstig sein, wenn in der Ansicht B-B der Punkt des Krümmungswechsels für wenigstens die Vorderkanten VK(i) und VK(i+1) oder die Hinterkanten HK(i) und HK(i+1) im Bereich zwischen der Viertelmeridionalstromlinie SLQ und der mittleren Meridionalstromlinie SLM vorgesehen ist. Dabei ist es vorteilhaft, wenn der Punkt des Krümmungswechsels näher an der SLQ als an der SLM vorgesehen ist.

Es kann unter baulichen Einschränkungen weiterhin günstig sein, wenn in der Ansicht B-B der Punkt des Krümmungswechsels aller Schaufelkanten VK(i), HK(i), VK(i+1) und HK(i+1) im Bereich zwischen der Viertelmeridionalstromlinie SLQ und der mittleren Meridionalstromlinie SLM vorgesehen ist. Dabei ist es vorteilhaft, wenn der Punkt des Krümmungswechsels näher an der SLQ als an der SLM vorgesehen ist.

Von Bedeutung für eine besonders strömungsgerechte Gestaltung der Schaufelkanten sind deren Kippwinkel sowie Relationen der vier beteiligten Kippwinkel zueinander. Betrachtet wird hierfür, wie in der Fig. 5 dargestellt, eine Schaufelhälfte im Bereich zwischen der mittleren Meridionalstromlinie SLM und der Hauptströmungspfadberandung HB:
Es ist erfindungsgemäß günstig, wenn an wenigstens einer der beiden Vorderkanten VK(i) und VK(i+1) ein Kippwinkel (alpha1, alpha 3) von größer null vorgesehen ist. Dabei kann es vorteilhaft sein, wenn beide Kippwinkel (alpha1, alpha 3) größer als null sind.

Dabei kann es besonders vorteilhaft sein, wenn beide Kippwinkel mit Werten im Bereich von 0° < alpha < 20° vorgesehen sind.

Es ist weiterhin günstig, wenn an wenigstens einer der beiden Vorderkanten VK(i) und VK(i+1) ein Kippwinkel (alpha1, alpha 3) von kleiner null vorgesehen ist. Dabei kann es vorteilhaft sein, wenn beide Kippwinkel (alpha1, alpha 3) kleiner als null sind. Dabei kann es besonders vorteilhaft sein, wenn beide Kippwinkel mit Werten im Bereich von -5° < alpha < 0° vorgesehen sind.

Es ist weiterhin günstig, wenn an wenigstens einer der beiden Hinterkanten HK(i) und HK(i+1) ein Kippwinkel (alpha2, alpha 4) von kleiner null vorgesehen ist. Dabei kann es vorteilhaft sein, wenn beide Kippwinkel (alpha2, alpha 4) kleiner als null sind. Dabei kann es besonders vorteilhaft sein, wenn beide Kippwinkel mit Werten im Bereich von -10° < alpha < 0° vorgesehen sind.

Es ist weiterhin günstig, wenn an wenigstens einer der beiden Hinterkanten HK(i) und HK(i+1) ein Kippwinkel (alpha2, alpha 4) von größer null vorgesehen ist. Dabei kann es vorteilhaft sein, wenn beide Kippwinkel (alpha2, alpha 4) größer als null sind. Dabei kann es besonders vorteilhaft sein, wenn beide Kippwinkel mit Werten im Bereich von 0° < alpha < 10° vorgesehen sind.

Es ist weiterhin günstig, wenn an wenigstens dreien der vier Kanten VK(i), HK(i), VK(i+1) und HK(i+1) ein Kippwinkel von kleiner null vorgesehen ist. Dabei kann es vorteilhaft sein, wenn die Vorderkante VK(i) einen Kippwinkel alpha1 von größer als null besitzt. Dabei kann es besonders vorteilhaft sein, wenn der Kippwinkel alpha1 mit Werten im Bereich von 0° < alpha1 < 10° vorgesehen ist.

Es ist weiterhin günstig, wenn an allen vier Kanten VK(i), HK(i), VK(i+1) und HK(i+1) ein Kippwinkel von kleiner null vorgesehen ist.

Es ist weiterhin günstig, wenn an wenigstens dreien der vier Kanten VK(i), HK(i), VK(i+1) und HK(i+1) ein Kippwinkel von größer null vorgesehen ist. Dabei kann es vorteilhaft sein, wenn die Hinterkante HK(i+1) einen Kippwinkel alpha4 von kleiner als null besitzt. Dabei kann es besonders vorteilhaft sein, wenn der Kippwinkel alpha4 mit Werten im Bereich von -5° < alpha4 < 0° vorgesehen ist.

Es ist weiterhin günstig, wenn an allen vier Kanten VK(i), HK(i), VK(i+1) und HK(i+1) ein Kippwinkel von größer null vorgesehen ist.

Es kann weiterhin vorteilhaft sein, wenn beide Kippwinkel alpha1 und alpha 3 mit Werten im Bereich von 0° < alpha < 20° und beide Kippwinkel alpha2 und alpha 4 mit Werten im Bereich von -10° < alpha < 0° vorgesehen sind. Dabei kann es besonders günstig sein, wenn die Kippwinkel alpha1 und alpha 3 innerhalb einer Toleranz von 2° gleich bemessen sind. Dabei kann es zusätzlich günstig sein, wenn die Kippwinkel alpha2 und alpha 4 innerhalb einer Toleranz von 2° gleich bemessen sind. Dabei kann es zusätzlich günstig sein, wenn die Kippwinkel alpha2 und alpha 4 betragmäßig klein sind, gemäß -3° < alpha < 0°. Dabei kann es zusätzlich günstig sein, wenn die Kippwinkel alpha1 und alpha 3 groß sind, gemäß 10° < alpha < 20°.

Es kann weiterhin vorteilhaft sein, wenn beide Kippwinkel alpha1 und alpha 3 mit Werten im Bereich von -10° < alpha < 0° und beide Kippwinkel alpha2 und alpha 4 mit Werten im Bereich von 0° < alpha < 20° vorgesehen sind. Dabei kann es besonders günstig sein, wenn die Kippwinkel alpha1 und alpha 3 innerhalb einer Toleranz von 2° gleich bemessen sind. Dabei kann es zusätzlich günstig sein, wenn die Kippwinkel alpha2 und alpha 4 innerhalb einer Toleranz von 2° gleich bemessen sind. Dabei kann es zusätzlich günstig sein, wenn die Kippwinkel alpha1 und alpha 3 betragmäßig klein sind, gemäß -3° < alpha < 0°. Dabei kann es zusätzlich günstig sein, wenn die Kippwinkel alpha2 und alpha 4 groß sind, gemäß 10° < alpha < 20°.

Es ist weiterhin günstig, wenn an der VK(i+1) ein größerer Kippwinkel vorgesehen ist als an der VK(i), entsprechend alpha3 > alpha1. Es ist weiterhin günstig, wenn an der HK(i+1) ein größerer Kippwinkel vorgesehen ist als an der VK(i), entsprechend alpha4 > alpha1. Es ist weiterhin günstig, wenn an der HK(i+1) ein größerer Kippwinkel vorgesehen ist als an der HK(i), entsprechend alpha4 > alpha2. Es ist weiterhin günstig, wenn an der VK(i+1) ein größerer Kippwinkel vorgesehen ist als an der HK(i), entsprechend alpha3 > alpha2.

Es ist weiterhin günstig, wenn an wenigstens einer der beiden Hinterkanten HK(i) und HK(i+1) ein Kippwinkel (alpha2, alpha 4) von größer null vorgesehen ist, wobei alpha4 größer ist als alpha2. Dabei kann es besonders vorteilhaft sein, wenn an der HK(i+1) ein größerer Kippwinkel vorgesehen ist als an der VK(i), entsprechend alpha4 > alpha1. Dabei kann es zusätzlich vorteilhaft sein, wenn an der VK(i+1) ein größerer Kippwinkel vorgesehen ist als an der VK(i), entsprechend alpha3 > alpha1. Dabei kann es zusätzlich vorteilhaft sein, wenn an der VK(i) ein Kippwinkel größer als null vorgesehen ist.

Es ist weiterhin günstig, wenn an wenigstens zweien der vier Schaufelkanten VK(i), HK(i), VK(i+1) und HK(i+1) innerhalb einer Toleranz von 2° die Kippwinkel gleich groß vorgesehen sind. Dabei kann es vorteilhaft sein, wenn an wenigstens dreien der vier Schaufelkanten VK(i), HK(i), VK(i+1) und HK(i+1) innerhalb einer Toleranz von 2° die Kippwinkel gleich groß vorgesehen sind. Dabei kann es besonders vorteilhaft sein, wenn an allen vier Schaufelkanten VK(i), HK(i), VK(i+1) und HK(i+1) innerhalb einer Toleranz von 2° die Kippwinkel gleich groß vorgesehen sind.

Es ist weiterhin günstig, wenn an den Schaufelkanten VK(i) und HK(i) innerhalb einer Toleranz von 2° die Kippwinkel alpha1 und alpha2 gleich groß vorgesehen sind. Es ist weiterhin günstig, wenn an den Schaufelkanten VK(i) und HK(i) innerhalb einer Toleranz von 2° die Kippwinkel alpha1 und alpha2 mit gleichen Beträgen aber entgegengsetztem Vorzeichen vorgesehen sind.

Es ist weiterhin günstig, wenn an den Schaufelkanten VK(i+1) und HK(i+1) innerhalb einer Toleranz von 2° die Kippwinkel alpha3 und alpha4 gleich groß vorgesehen sind. Es ist weiterhin günstig, wenn an den Schaufelkanten VK(i+1) und HK(i+1) innerhalb einer Toleranz von 2° die Kippwinkel alpha3 und alpha4 mit gleichen Beträgen aber entgegengsetztem Vorzeichen vorgesehen sind.

Es ist weiterhin günstig, wenn an den Schaufelkanten HK(i) und VK(i+1) innerhalb einer Toleranz von 2° die Kippwinkel alpha2 und alpha3 gleich groß vorgesehen sind. Es ist weiterhin günstig, wenn an den Schaufelkanten HK(i) und VK(i+1) innerhalb einer Toleranz von 2° die Kippwinkel alpha2 und alpha3 mit gleichen Beträgen aber entgegengsetztem Vorzeichen vorgesehen sind.

Es ist weiterhin günstig, wenn an beiden Kanten VK(i) und HK(i+1) innerhalb einer Toleranz von 2° die Kippwinkel alpha1 und alpha4 gleich groß vorgesehen sind. Es ist weiterhin günstig, wenn an den Schaufelkanten VK(i) und HK(i+1) innerhalb einer Toleranz von 2° die Kippwinkel alpha1 und alpha4 mit gleichen Beträgen aber entgegengsetztem Vorzeichen vorgesehen sind.

Es ist weiterhin günstig, wenn die Vorderkante VK(i) mit einem positiven Kippwinkel alpha1 > 0 und die Hinterkante HK(i+1) mit einem negativen Kippwinkel alpha4 < 0 vorgesehen ist.

Es ist weiterhin günstig, wenn die Vorderkante VK(i) mit einem negativen Kippwinkel alpha1 < 0 und die Hinterkante HK(i+1) mit einem positiven Kippwinkel alpha4 > 0 vorgesehen ist.

Es ist weiterhin günstig, wenn die Hinterkante HK(i) mit einem negativen Kippwinkel alpha2 < 0 und die Vorderkante VK(i+1) mit einem positiven Kippwinkel alpha3 > 0 vorgesehen ist.

Es ist weiterhin günstig, wenn die Hinterkante HK(i) mit einem positiven Kippwinkel alpha2 > 0 und die Vorderkante VK(i+1) mit einem negativen Kippwinkel alpha3 < 0 vorgesehen ist.

Es ist weiterhin günstig, wenn die beiden Kanten HK(i) und VK(i+1) mit größeren Kippwinkeln als die beiden Kanten VK(i) und HK(i+1) vorgesehen sind. Dabei kann es vorteilhaft sein, wenn die Kippwinkel alpha1 und alpha4 der Kanten VK(i) und HK(i+1) betragmäßig klein sind, gemäß -3° < alpha < 3°. Dabei kann es zusätzlich vorteilhaft sein, wenn der Kippwinkel alpha1 positiv und der Kippwinkel alpha4 negativ ist.

Es ist weiterhin günstig, wenn die beiden Kanten HK(i) und VK(i+1) mit kleineren Kippwinkeln als die beiden Kanten VK(i) und HK(i+1) vorgesehen sind. Dabei kann es vorteilhaft sein, wenn die Kippwinkel alpha1 und alpha4 der Kanten VK(i) und HK(i+1) betragmäßig klein sind, gemäß -3° < alpha < 3°. Dabei kann es zusätzlich vorteilhaft sein, wenn der Kippwinkel alpha1 positiv und der Kippwinkel alpha4 negativ ist.

Es ist weiterhin günstig, wenn die Kippwinkel alpha1, alpha2 und alpha4 der Kanten VK(i), HK(i) und HK(i+1) betragmäßig klein sind, gemäß -3° < alpha < 3°. Dabei kann es zusätzlich vorteilhaft sein, wenn der Kippwinkel alpha1 positiv, der Kippwinkel alpha4 negativ ist. Dabei kann es zusätzlich vorteilhaft sein, wenn der Kippwinkel alpha3 negativ ist. Dabei kann es zusätzlich vorteilhaft sein, wenn der Kippwinkel alpha3 der Vorderkante VK(i+1) positiv mit Werten im Bereich von 5° < alpha < 20° vorgesehen ist. Für alle betrachteten Ausführungen der erfindungsgemäßen Schaufelreihengruppe kann es vorteilhaft sein, wenn die VK(i) einen größeren Kippwinkel besitzt als alle anderen Schaufelkanten.

Ebenfalls von Bedeutung für eine strömungsgerechte Gestaltung der Schaufelkanten sind die Wölbungsgrade sowie die Relation der vier beteiligten Wölbungsgrade zueinander.

Zunächst werden die Wölbungsgrade hinsichtlich ihrer Größe klassifiziert, wobei vier Klassen gebildet werden:
Klasse 1: sehr kleiner Wölbungsgrad gemäß 0 < WG < 0,003
Klasse 2: kleiner Wolbungsgrad gemäß 0,003 < WG < 0,01
Klasse 3: mittlerer Wolbungsgrad gemäß 0,01 < WG < 0,05
Klasse 4: großer Wolbungsgrad gemäß 0,05 < WG < 0,2

Es ist erfindungsgemäß günstig, wenn an der Vorderkante VK(i) ein Wölbungsgrad einer der Klassen 2, 3 und 4 vorgesehen ist. Dabei ist es vorteilhaft, wenn an der VK(i) ein Wölbungsgrad einer der Klassen 3 und 4 vorgesehen ist. Dabei ist es zusätzlich vorteilhaft, wenn an der VK(i) ein Wölbungsgrad der Klasse 4 vorgesehen ist.

Es ist weiterhin günstig, wenn an der Vorderkante VK(i+1) ein Wölbungsgrad einer der Klassen 1, 2,3 und 4 vorgesehen ist. Dabei ist es vorteilhaft, wenn an der VK(i+1) ein Wölbungsgrad einer der Klassen 2, 3 und 4 vorgesehen ist. Dabei ist es zusätzlich vorteilhaft, wenn an der VK(i+1) ein Wölbungsgrad einer der Klassen 3 und 4 vorgesehen ist. Dabei ist es besonders vorteilhaft, wenn an der VK(i+1) ein Wölbungsgrad der Klasse 4 vorgesehen ist.

Es ist weiterhin günstig, wenn an der Hinterkante HK(i) ein Wölbungsgrad einer der Klassen 1, 2,und 3 vorgesehen ist. Dabei ist es vorteilhaft, wenn an der HK(i) ein Wölbungsgrad einer der Klassen 1 und 2 vorgesehen ist. Dabei ist es zusätzlich vorteilhaft, wenn an der HK(i) ein Wölbungsgrad der Klasse 2 vorgesehen ist.

Es ist weiterhin günstig, wenn an der Hinterkante HK(i+1) ein Wölbungsgrad einer der Klassen 1, 2 und 3 vorgesehen ist. Dabei ist es vorteilhaft, wenn an der HK(i+1) ein Wölbungsgrad einer der Klassen 1 und 2 vorgesehen ist. Dabei ist es zusätzlich vorteilhaft, wenn an der HK(i+1) ein Wölbungsgrad der Klasse 2 vorgesehen ist.

Es ist weiterhin günstig, wenn an der Vorderkante VK(i) ein Wölbungsgrad einer der Klassen 3 und 4 und an der Hinterkante HK(i+1) ein Wölbungsgrad einer der Klassen 1 und 2 vorgesehen ist. Dabei ist es vorteilhaft, wenn an der VK(i) ein Wölbungsgrad der Klasse 3 und an der HK(i+1) ein Wölbungsgrad der Klasse 2 vorgesehen ist. Dabei ist es zusätzlich vorteilhaft, wenn an den Kanten HK(i) und VK(i+1) ein Wölbungsgrad der Klasse 3 vorgesehen ist.

Es ist weiterhin günstig, wenn an der Vorderkante VK(i) und an der Hinterkante HK(i+1) ein Wölbungsgrad einer der Klassen 1 und 2 vorgesehen ist. Dabei ist es vorteilhaft, wenn an der VK(i) und an der HK(i+1) ein Wölbungsgrad der Klasse 2 vorgesehen ist. Dabei ist es zusätzlich vorteilhaft, wenn an den Kanten HK(i) und VK(i+1) ein Wölbungsgrad der Klasse 1 vorgesehen ist.

Es ist weiterhin günstig, wenn an der Vorderkante VK(i) und an der Hinterkante HK(i+1) ein Wölbungsgrad einer der Klassen 3 und 4 vorgesehen ist. Dabei ist es vorteilhaft, wenn an der VK(i) ein Wölbungsgrad der Klasse 4 und an der HK(i+1) ein Wölbungsgrad der Klasse 3 vorgesehen ist. Dabei ist es zusätzlich vorteilhaft, wenn an den Kanten HK(i) und VK(i+1) ein Wölbungsgrad der Klasse 3 vorgesehen ist.

Es ist weiterhin günstig, wenn an der Vorderkante VK(i) ein Wölbungsgrad einer der Klassen 1 und 2 und an der Hinterkante HK(i+1) ein Wölbungsgrad einer der Klassen 3 und 4 vorgesehen ist. Dabei ist es vorteilhaft, wenn an der VK(i) ein Wölbungsgrad der Klasse 2 und an der HK(i+1) ein Wölbungsgrad der Klasse 3 vorgesehen ist. Dabei ist es zusätzlich vorteilhaft, wenn an den Kanten HK(i) und VK(i+1) ein Wölbungsgrad der Klasse 3 vorgesehen ist.

Es ist weiterhin günstig, wenn an wenigstens zweien der Kanten VK(i), HK(i), VK(i+1) und HK(i+1) Wölbungsgrade der selben Klasse vorgesehen sind. Dabei kann es vorteilhaft sein, wenn der Wölbungsgrad an wenigstens zwei der Kanten innerhalb einer Toleranz von 0,02 gleich groß vorgesehen ist.

Es ist weiterhin günstig, wenn an den Kanten VK(i) und HK(i) Wölbungsgrade der selben Klasse vorgesehen sind. Dabei ist es vorteilhaft, wenn an den Kanten VK(i+1) und HK(i+1) ebenfalls Wölbungsgrade der selben Klasse vorgesehen sind.

Es ist weiterhin günstig, wenn an den Kanten VK(i+1) und HK(i+1) Wölbungsgrade der selben Klasse vorgesehen sind. Dabei ist es vorteilhaft, wenn an den Kanten VK(i) und HK(i) Wölbungsgrade einer anderen aber selben Klasse vorgesehen sind.

Es ist weiterhin günstig, wenn an den Kanten VK(i) und HK(i+1) Wölbungsgrade der selben Klasse vorgesehen sind. Dabei ist es vorteilhaft, wenn an den Kanten VK(i+1) und HK(i) Wölbungsgrade einer anderen aber selben Klasse vorgesehen sind.

Es ist weiterhin günstig, wenn an den Kanten VK(i+1) und HK(i) Wölbungsgrade der selben Klasse vorgesehen sind. Dabei ist es vorteilhaft, wenn an den Kanten VK(i) und HK(i+1) Wölbungsgrade einer anderen aber selben Klasse vorgesehen sind.

Es ist weiterhin günstig, wenn an wenigstens dreien der Kanten VK(i), HK(i), VK(i+1) und HK(i+1) Wölbungsgrade der selben Klasse vorgesehen sind. Dabei kann es vorteilhaft sein, wenn der Wölbungsgrad an wenigstens drei der Kanten innerhalb einer Toleranz von 0,02 gleich groß vorgesehen ist.

Es ist weiterhin günstig, wenn an allen Kanten VK(i), HK(i), VK(i+1) und HK(i+1) Wölbungsgrade der selben Klasse vorgesehen sind. Dabei kann es vorteilhaft sein, wenn der Wölbungsgrad an allen Kanten innerhalb einer Toleranz von 0,02 gleich groß vorgesehen ist.

Es ist weiterhin günstig,
wenn an der Kante VK(i) ein Wölbungsgrad der Klasse 4,
und an der Kante HK(i) ein Wölbungsgrad der Klasse 2,
und an der Kante VK(i+1) ein Wölbungsgrad der Klasse 4,
und an der Kante HK(i+1) ein Wölbungsgrad der Klasse 1 vorgesehen ist.

Es ist weiterhin günstig,
wenn an der Kante VK(i) ein Wölbungsgrad der Klasse 1,
und an der Kante HK(i) ein Wölbungsgrad der Klasse 1,
und an der Kante VK(i+1) ein Wölbungsgrad der Klasse 4,
und an der Kante HK(i+1) ein Wölbungsgrad der Klasse 1 vorgesehen ist.

Es ist weiterhin günstig,
wenn an der Kante VK(i) ein Wölbungsgrad der Klasse 4,
und an der Kante HK(i) ein Wölbungsgrad der Klasse 1,
und an der Kante VK(i+1) ein Wölbungsgrad der Klasse 1,
und an der Kante HK(i+1) ein Wölbungsgrad der Klasse 1 vorgesehen ist.

Es ist weiterhin günstig,
wenn an der Kante VK(i) ein Wölbungsgrad der Klasse 3,
und an der Kante HK(i) ein Wölbungsgrad der Klasse 2,
und an der Kante VK(i+1) ein Wölbungsgrad der Klasse 2,
und an der Kante HK(i+1) ein Wölbungsgrad der Klasse 1 vorgesehen ist.

Es ist weiterhin günstig,
wenn an der Kante VK(i) ein Wölbungsgrad der Klasse 2,
und an der Kante HK(i) ein Wölbungsgrad der Klasse 2,
und an der Kante VK(i+1) ein Wölbungsgrad der Klasse 3,
und an der Kante HK(i+1) ein Wölbungsgrad der Klasse 2 vorgesehen ist.

Es ist weiterhin günstig,
wenn an der Kante VK(i) ein Wölbungsgrad der Klasse 2,
und an der Kante HK(i) ein Wölbungsgrad der Klasse 2,
und an der Kante VK(i+1) ein Wölbungsgrad der Klasse 4,
und an der Kante HK(i+1) ein Wölbungsgrad der Klasse 2 vorgesehen ist.

Es ist weiterhin günstig,
wenn an der Kante VK(i) ein Wölbungsgrad der Klasse 2,
und an der Kante HK(i) ein Wölbungsgrad der Klasse 2,
und an der Kante VK(i+1) ein Wölbungsgrad der Klasse 3,
und an der Kante HK(i+1) ein Wölbungsgrad der Klasse 1 vorgesehen ist.

Es ist weiterhin günstig,
wenn an der Kante VK(i) ein Wölbungsgrad der Klasse 2,
und an der Kante HK(i) ein Wölbungsgrad der Klasse 2,
und an der Kante VK(i+1) ein Wölbungsgrad der Klasse 4,
und an der Kante HK(i+1) ein Wölbungsgrad der Klasse 1 vorgesehen ist.

Es ist weiterhin günstig,
wenn an der Kante VK(i) ein Wölbungsgrad der Klasse 2,
und an der Kante HK(i) ein Wölbungsgrad der Klasse 1,
und an der Kante VK(i+1) ein Wölbungsgrad der Klasse 3,
und an der Kante HK(i+1) ein Wölbungsgrad der Klasse 3 vorgesehen ist.

Es ist weiterhin günstig,
wenn an der Kante VK(i) ein Wölbungsgrad der Klasse 2,
und an der Kante HK(i) ein Wölbungsgrad der Klasse 2,
und an der Kante VK(i+1) ein Wölbungsgrad der Klasse 3,
und an der Kante HK(i+1) ein Wölbungsgrad der Klasse 3 vorgesehen ist.

Es ist weiterhin günstig,
wenn an der Kante VK(i) ein Wölbungsgrad der Klasse 2,
und an der Kante HK(i) ein Wölbungsgrad der Klasse 3,
und an der Kante VK(i+1) ein Wölbungsgrad der Klasse 4,
und an der Kante HK(i+1) ein Wölbungsgrad der Klasse 1 vorgesehen ist.

Neben den im voranstehenden Text beschriebenen Größen Kantenform, Kippwinkel und Wölbungsgrad spielt auch noch die Position der maximalen Wölbungen (d1, d2, d3, d4) eine Rolle für die günstige Beeinflussung der Strömung im Bereich nahe der Hauptströmungspfadberandung.

Es ist günstig, wenn in der Ansicht B-B der Punkt maximaler Wölbung wenigstens einer der Schaufelkanten VK(i), HK(i), VK(i+1) und HK(i+1) im Bereich zwischen der Viertelmeridionalstromlinie SLQ und der Hauptströmungspfadberandung HB vorgesehen ist. Dabei ist es vorteilhaft, wenn der Punkt maximaler Wölbung näher an der SLQ als an der HB vorgesehen ist.

Es ist günstig, wenn in der Ansicht B-B der Punkt maximaler Wölbung für wenigstens die Vorderkanten VK(i) und VK(i+1) oder die Hinterkanten HK(i) und HK(i+1) im Bereich zwischen der Viertelmeridionalstromlinie SLQ und der Hauptströmungspfadberandung HB vorgesehen ist. Dabei ist es vorteilhaft, wenn der Punkt maximaler Wölbung näher an der SLQ als an der HB vorgesehen ist.

Es ist günstig, wenn in der Ansicht B-B der Punkt maximaler Wölbung aller Schaufelkanten VK(i), HK(i), VK(i+1) und HK(i+1) im Bereich zwischen der Viertelmeridionalstromlinie SLQ und der Hauptströmungspfadberandung HB vorgesehen ist. Dabei ist es vorteilhaft, wenn der Punkt maximaler Wölbung näher an der SLQ als an der HB vorgesehen ist.

Es kann weiterhin günstig sein, wenn in der Ansicht B-B der Punkt maximaler Wölbung wenigstens einer der Schaufelkanten VK(i), HK(i), VK(i+1) und HK(i+1) näher an der HB als an der SLQ vorgesehen ist. Dabei ist es vorteilhaft, wenn dies für wenigstens eine der Vorderkanten VK(i) und VK(i+1) zutrifft.

Es kann weiterhin günstig sein, wenn in der Ansicht B-B der Punkt maximaler Wölbung für wenigstens die Vorderkanten VK(i) und VK(i+1) oder die Hinterkanten HK(i) und HK(i+1) näher an der HB als an der SLQ vorgesehen ist. Dabei ist es vorteilhaft, wenn dies für die Vorderkanten VK(i) und VK(i+1) zutrifft.

Es kann weiterhin günstig sein, wenn in der Ansicht B-B der Punkt maximaler Wölbung aller Schaufelkanten VK(i), HK(i), VK(i+1) und HK(i+1) näher an der HB als an der SLQ vorgesehen ist.

Es kann unter baulichen Einschränkungen auch günstig sein, wenn in der Ansicht B-B der Punkt maximaler Wölbung wenigstens einer der Schaufelkanten VK(i), HK(i), VK(i+1) und HK(i+1) im Bereich zwischen der Viertelmeridionalstromlinie SLQ und der mittleren Meridionalstromlinie SLM vorgesehen ist. Dabei ist es vorteilhaft, wenn der Punkt maximaler Wölbung näher an der SLQ als an der SLM vorgesehen ist.

Es kann unter baulichen Einschränkungen weiterhin günstig sein, wenn in der Ansicht B-B der Punkt maximaler Wölbung für wenigstens die Vorderkanten VK(i) und VK(i+1) oder die Hinterkanten HK(i) und HK(i+1) im Bereich zwischen der Viertelmeridionalstromlinie SLQ und der mittleren Meridionalstromlinie SLM vorgesehen ist. Dabei ist es vorteilhaft, wenn der Punkt maximaler Wölbung näher an der SLQ als an der SLM vorgesehen ist.

Es kann unter baulichen Einschränkungen weiterhin günstig sein, wenn in der Ansicht B-B der Punkt maximaler Wölbung aller Schaufelkanten VK(i), HK(i), VK(i+1) und HK(i+1) im Bereich zwischen der Viertelmeridionalstromlinie SLQ und der mittleren Meridionalstromlinie SLM vorgesehen ist. Dabei ist es vorteilhaft, wenn der Punkt maximaler Wölbung näher an der Viertelmeridionalstromlinie SLQ als an der mittleren Meridionalstromlinie SLM vorgesehen ist.

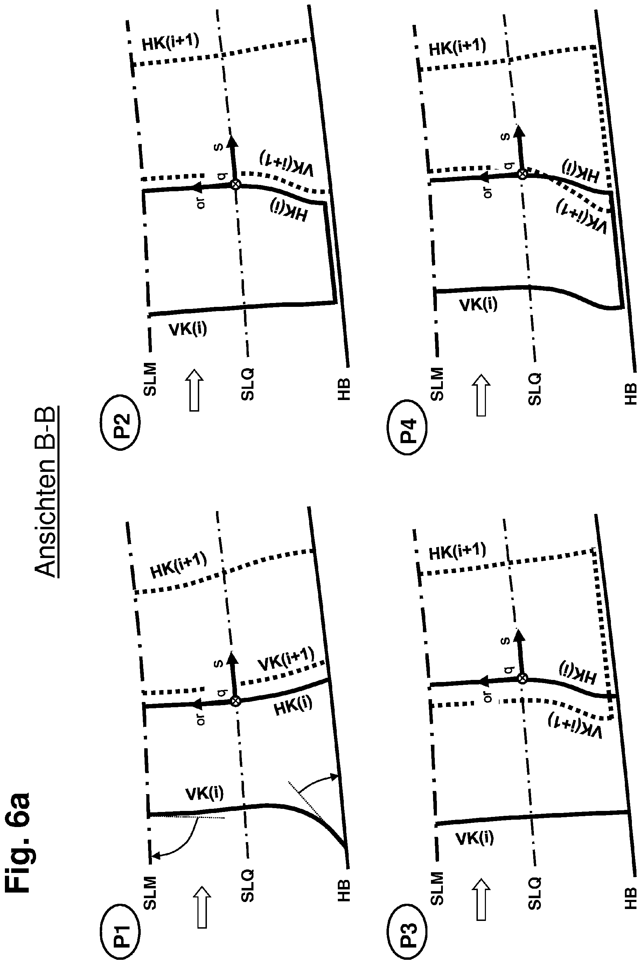

Grundlegende Merkmale der erfindungsgemäßen Schaufelreihengruppe sind im voranstehenden Text festgelegt worden. Im Folgenden wird die Erfindung anhand von Beispielen weiter konkretisiert. Die Figuren 6a bis Fig. 6e zeigen dazu in den Teilabbildungen P1 bis P20 jeweils die vier Schaufelkanten VK(i), HK(i), VK(i+1) und HK(i+1) zweier benachbarter und hintereinander angeordneter Schaufeln i und i+1 zweier Schaufelreihen einer erfindungsgemäßen Schaufelreihengruppe in der Ansicht B-B gemäß der Fig. 4 im Bereich zwischen der mittleren Meridionalstromlinie SLM und der Hauptströmungspfadberandung HB. Auf halbem Weg zwischen der mittleren Meridionalstromlinie SLM und der Hauptströmungspfadberandung HB ist jeweils die Viertelmeridionalstromlinie SLQ eingezeichnet.

Die Teilabbildung P1 zeigt die erfindungsgemäße Variante einer Schaufelreihengruppe mit folgenden Merkmalen: an der VK(i) ist ein Kantentyp E, an der HK(i) ein Kantentyp D, an der VK(i+1) ein Kantentyp D, und an der HK(i+1) ein Kantentyp E vorgesehen. Die Kanten HK(i) und VK(i+1) bzw. VK(i) und HK(i+1) sind von jeweils gleichem Kantentyp. Dabei kann es vorteilhaft sein, wenn die Kante VK(i) den Punkt des Krümmungswechsels, wie dargestellt, im Bereich zwischen SLQ und HB besitzt; in einem besonderen Fall kann der Punkt des Krümmungswechsels auf der SLQ vorgesehen sein. Die Kante HK(i) ist gänzlich stromauf der Kante VK(i+1) angeordnet; alternativ kann, anders als dargestellt, die Kante HK(i) gänzlich stromab der Kante VK(i+1) angeordnet sein. Es ist in jedem Fall vorteilhaft, wenn die Kanten HK(i) und VK(i+1) im Wesentlichen (innerhalb einer Toleranz von 2° lokalen Neigungswinkels) parallel verlaufen. Es kann zusätzlich vorteilhaft sein, wenn sich die Kanten VK(i) und HK(i+1) im Bereich zwischen SLQ und HB stetig in Richtung der HB voneinander entfernen. Es kann zusätzlich vorteilhaft sein, wenn alle vier Schaufelkanten örtlich an der SLM mit der SLM im Wesentlichen (innerhalb einer Toleranz von 2°) einen rechten Winkel einschließen. Es kann zusätzlich vorteilhaft sein, wenn die Hinterkante HK(i+1) örtlich an der HB mit der HB im Wesentlichen (innerhalb einer Toleranz von 2°) einen rechten Winkel einschließt.

Der lokale Neigungswinkel einer Schaufelkante an der SLM oder an der HB wird hier stets im Uhrzeigersinn von der jeweiligen Kante auf kürzestem Weg zur SLM bzw. zur HB gemessen (siehe Teilabbildung P1).

Die Teilabbildung P2 zeigt die erfindungsgemäße Variante einer Schaufelreihengruppe mit folgenden Merkmalen: an der VK(i) ist ein Kantentyp B, an der HK(i) ein Kantentyp F, an der VK(i+1) ein Kantentyp F, und an der HK(i+1) ein Kantentyp B vorgesehen. Die Kanten HK(i) und VK(i+1) bzw. VK(i) und HK(i+1) sind von jeweils gleichem Kantentyp. Dabei kann es vorteilhaft sein, wenn die Kanten HK(i) und VK(i+1) den Punkt des Krümmungswechsels, wie dargestellt, im Bereich zwischen SLQ und HB besitzen; in einem besonderen Fall kann der Punkt des Krümmungswechsels auf der SLQ vorgesehen sein. Die Kante HK(i) ist gänzlich stromauf der Kante VK(i+1) angeordnet; alternativ kann, anders als dargestellt, die Kante HK(i) gänzlich stromab der Kante VK(i+1) angeordnet sein. Es ist in jedem Fall vorteilhaft, wenn die Kanten HK(i) und VK(i+1) im Wesentlichen (innerhalb einer Toleranz von 2° lokalen Neigungswinkels) parallel verlaufen. Es kann zusätzlich vorteilhaft sein, wenn sich die Kanten VK(i) und HK(i+1) im Wesentlichen (innerhalb einer Toleranz von 2° lokalen Neigungswinkels) parallel verlaufen.

Es kann zusätzlich vorteilhaft sein, wenn alle vier Schaufelkanten örtlich an der SLM mit der SLM im Wesentlichen (innerhalb einer Toleranz von 2°) einen rechten Winkel einschließen. Es kann zusätzlich vorteilhaft sein, wenn die Hinterkante HK(i+1) örtlich an der HB mit der HB im Wesentlichen (innerhalb einer Toleranz von 2°) einen rechten Winkel einschließt. Es kann zusätzlich vorteilhaft sein, wenn alle vier Schaufelkanten örtlich an der SLM mit der SLM im Wesentlichen (innerhalb einer Toleranz von 2°) einen rechten Winkel einschließen. Es kann zusätzlich vorteilhaft sein, wenn alle vier Schaufelkanten örtlich an der HB mit der HB im Wesentlichen (innerhalb einer Toleranz von 2°) einen rechten Winkel einschließen.

Die Teilabbildung P3 zeigt die erfindungsgemäße Variante einer Schaufelreihengruppe mit folgenden Merkmalen: an der VK(i) ist ein Kantentyp A, an der HK(i) ein Kantentyp F, an der VK(i+1) ein Kantentyp F, und an der HK(i+1) ein Kantentyp A vorgesehen. Die Kanten HK(i) und VK(i+1) bzw. VK(i) und HK(i+1) sind von jeweils gleichem Kantentyp. Dabei kann es vorteilhaft sein, wenn die Kanten HK(i) und VK(i+1) den Punkt des Krümmungswechsels, wie dargestellt, im Bereich zwischen SLQ und HB besitzen; in einem besonderen Fall kann der Punkt des Krümmungswechsels auf der SLQ vorgesehen sein. Die Kante HK(i) ist gänzlich stromab der Kante VK(i+1) angeordnet; alternativ kann, anders als dargestellt, die Kante HK(i) gänzlich stromauf der Kante VK(i+1) angeordnet sein. Es ist in jedem Fall vorteilhaft, wenn die Kanten HK(i) und VK(i+1) im Wesentlichen (innerhalb einer Toleranz von 2° lokalen Neigungswinkels) parallel verlaufen.

Es kann zusätzlich vorteilhaft sein, wenn sich die Kanten VK(i) und HK(i+1) im Wesentlichen (innerhalb einer Toleranz von 2° lokalen Neigungswinkels) parallel verlaufen. Es kann zusätzlich vorteilhaft sein, wenn alle vier Schaufelkanten örtlich an der SLM mit der SLM im Wesentlichen (innerhalb einer Toleranz von 2°) einen rechten Winkel einschließen. Es kann zusätzlich vorteilhaft sein, wenn die Hinterkante HK(i+1) örtlich an der HB mit der HB im Wesentlichen (innerhalb einer Toleranz von 2°) einen rechten Winkel einschließt. Es kann zusätzlich vorteilhaft sein, wenn alle vier Schaufelkanten örtlich an der HB mit der HB im Wesentlichen (innerhalb einer Toleranz von 2°) einen rechten Winkel einschließen.

Die Teilabbildung P4 zeigt die erfindungsgemäße Variante einer Schaufelreihengruppe mit folgenden Merkmalen: an der VK(i) ist ein Kantentyp F, an der HK(i) ein Kantentyp F, an der VK(i+1) ein Kantentyp F, und an der HK(i+1) ein Kantentyp A vorgesehen. Die Kanten VK(i), HK(i) und VK(i+1) sind von gleichem Kantentyp. Dabei kann es vorteilhaft sein, wenn die Kanten VK(i), HK(i) und VK(i+1) den Punkt des Krümmungswechsels, wie dargestellt, im Bereich zwischen SLQ und HB besitzen; in einem besonderen Fall kann der Punkt des Krümmungswechsels auf der SLQ vorgesehen sein. Die Kante HK(i) schneidet die Kante VK(i+1) und ist in einem Bereich angrenzend an die HB stromab der VK(i+1) angeordnet. Es kann dabei vorteilhaft sein, wenn der Schnittpunkt der Kanten HK(i) und VK(i+1) im Bereich zwischen der SLQ und der HB vorgesehen ist; alternativ kann es bei baulichen Einschränkungen vorteilhaft sein, wenn der Schnittpunkt (anders als dargestellt) im Bereich zwischen der SLM und der SLQ oder gar auf der SLQ vorgesehen ist.

Es kann zusätzlich vorteilhaft sein, wenn sich die Kanten VK(i) und HK(i) im Wesentlichen (innerhalb einer Toleranz von 2° lokalen Neigungswinkels) parallel verlaufen. Es kann zusätzlich vorteilhaft sein, wenn alle vier Schaufelkanten örtlich an der SLM mit der SLM im Wesentlichen (innerhalb einer Toleranz von 2°) einen rechten Winkel einschließen. Es kann zusätzlich vorteilhaft sein, wenn die Hinterkante HK(i+1) örtlich an der HB mit der HB im Wesentlichen (innerhalb einer Toleranz von 2°) einen rechten Winkel einschließt. Es kann zusätzlich vorteilhaft sein, wenn alle vier Schaufelkanten örtlich an der HB mit der HB im Wesentlichen (innerhalb einer Toleranz von 2°) einen rechten Winkel einschließen.

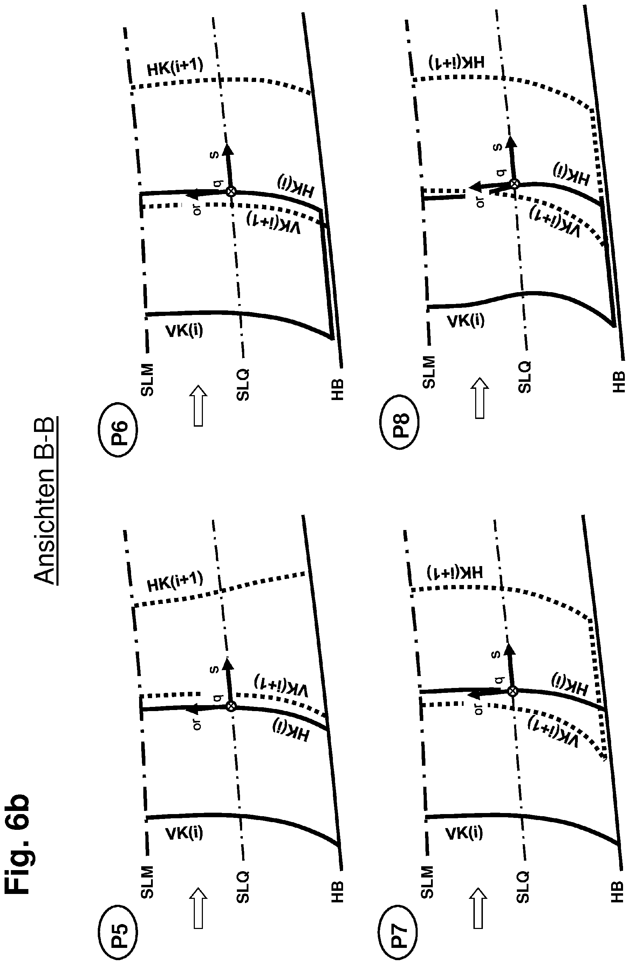

Die Teilabbildung P5 der Fig. 6b zeigt die erfindungsgemäße Variante einer Schaufelreihengruppe mit folgenden Merkmalen: an der VK(i) ist ein Kantentyp C, an der HK(i) ein Kantentyp C, an der VK(i+1) ein Kantentyp C, und an der HK(i+1) ein Kantentyp B vorgesehen. Die Kanten VK(i), HK(i) und VK(i+1) sind von gleichem Kantentyp. Dabei kann es vorteilhaft sein, wenn die Kanten VK(i), HK(i) und VK(i+1) den Punkt maximaler Wölbung im Bereich zwischen SLQ und HB besitzen; in einem besonderen Fall kann der Punkt maximaler Wölbung auf der SLQ vorgesehen sein. Die Kante HK(i) ist wenigstens teilweise (oder wie hier dargestellt gänzlich) stromauf der Kante VK(i+1) angeordnet; alternativ kann, anders als dargestellt, die Kante HK(i) gänzlich stromab der Kante VK(i+1) angeordnet sein. Es ist in jedem Fall vorteilhaft, wenn die Kanten HK(i) und VK(i+1) im Wesentlichen (innerhalb einer Toleranz von 2° lokalen Neigungswinkels) parallel verlaufen. Es kann zusätzlich vorteilhaft sein, wenn sich die Kanten VK(i) und HK(i+1) im Bereich zwischen SLQ und HB stetig in Richtung der HB voneinander entfernen. Es kann zusätzlich vorteilhaft sein, wenn alle vier Schaufelkanten örtlich an der SLM mit der SLM im Wesentlichen (innerhalb einer Toleranz von 2°) einen rechten Winkel einschließen. Es kann zusätzlich vorteilhaft sein, wenn die Hinterkante HK(i+1) örtlich an der HB mit der HB im Wesentlichen (innerhalb einer Toleranz von 2°) einen rechten Winkel einschließt.

Es kann zusätzlich vorteilhaft sein, wenn in einem Bereich angrenzend an die SLM die Kante HK(i) stromauf der Kante VK(i+1) vorgesehen ist und diese zwei Kanten einen Schnittpunkt bilden. Es ist vorteilhaft, wenn der Schnittpunkt im Bereich zwischen der SLQ und der HB, idealerweise näher an der SLQ, vorgesehen ist.

Die Teilabbildung P6 zeigt die erfindungsgemäße Variante einer Schaufelreihengruppe mit folgenden Merkmalen: an der VK(i) ist ein Kantentyp C, an der HK(i) ein Kantentyp C, an der VK(i+1) ein Kantentyp C, und an der HK(i+1) ein Kantentyp C vorgesehen. Die Kanten VK(i), HK(i), VK(i+1) und HK(i+1) sind von gleichem Kantentyp. Dabei kann es vorteilhaft sein, wenn alle Kanten den Punkt maximaler Wölbung im Bereich zwischen SLQ und HB besitzen; in einem besonderen Fall kann der Punkt maximaler Wölbung auf der SLQ vorgesehen sein. Die Kante HK(i) ist wenigstens teilweise (oder wie hier dargestellt gänzlich) stromab der Kante VK(i+1) angeordnet; alternativ kann, anders als dargestellt, die Kante HK(i) gänzlich stromauf der Kante VK(i+1) angeordnet sein. Es ist in jedem Fall vorteilhaft, wenn die Kanten HK(i) und VK(i+1) im Wesentlichen (innerhalb einer Toleranz von 2° lokalen Neigungswinkels) parallel verlaufen. Es kann zusätzlich vorteilhaft sein, wenn die Kanten VK(i) und HK(i+1) im Wesentlichen (innerhalb einer Toleranz von 2° lokalen Neigungswinkels) parallel verlaufen.

Es kann zusätzlich vorteilhaft sein, wenn alle vier Schaufelkanten örtlich an der SLM mit der SLM im Wesentlichen (innerhalb einer Toleranz von 2°) einen rechten Winkel einschließen. Es kann zusätzlich vorteilhaft sein, wenn an allen vier Schaufelkanten örtlich an der HB zwischen der HB und derjeweiligen Kante ein spitzer Winkel von kleiner 75° vorgesehen ist. Es kann zusätzlich vorteilhaft sein, wenn in einem Bereich angrenzend an die SLM die Kante HK(i) stromauf der Kante VK(i+1) vorgesehen ist und diese zwei Kanten einen Schnittpunkt bilden. Es ist vorteilhaft, wenn der Schnittpunkt im Bereich zwischen der SLQ und der HB, idealerweise näher an der SLQ, vorgesehen ist.

Die Teilabbildung P7 zeigt die erfindungsgemäße Variante einer Schaufelreihengruppe mit folgenden Merkmalen: an der VK(i) ist ein Kantentyp C, an der HK(i) ein Kantentyp C und an der VK(i+1) ein Kantentyp C vorgesehen. Die Kanten VK(i), HK(i) und VK(i+1) sind von gleichem Kantentyp. Dabei kann es vorteilhaft sein, wenn diese Kanten den Punkt maximaler Wölbung im Bereich zwischen SLQ und HB besitzen; in einem besonderen Fall kann der Punkt maximaler Wölbung auf der SLQ vorgesehen sein. Die Kante HK(i) ist wenigstens teilweise (oder wie hier dargestellt gänzlich) stromab der Kante VK(i+1) angeordnet. Es ist vorteilhaft, wenn die Kanten HK(i) und VK(i+1) sich im Bereich zwischen der SLQ und der HB in Richtung der HB voneinander entfernen und wenn die VK(i+1) örtlich an der HB mit der HB einen spitzeren Winkel einschließt als die HK(i).

Es kann zusätzlich vorteilhaft sein, wenn an der HK(i+1) ebenfalls ein Kantentyp C vorgesehen ist. Es kann dabei zusätzlich vorteilhaft sein, wenn die Kanten HK(i) und HK(i+1) sich im Bereich zwischen der SLQ und der HB in Richtung der HB einander annähern. Es kann zusätzlich vorteilhaft sein, wenn die Kanten VK(i) und HK(i+1) sich im Bereich zwischen der SLQ und der HB in Richtung der HB einander annähern. Es kann zusätzlich vorteilhaft sein, wenn alle vier Schaufelkanten örtlich an der SLM mit der SLM im Wesentlichen (innerhalb einer Toleranz von 2°) einen rechten Winkel einschließen. Es kann zusätzlich vorteilhaft sein, wenn an allen vier Schaufelkanten örtlich an der HB zwischen der HB und derjeweiligen Kante ein spitzer Winkel von kleiner 75° vorgesehen ist. Es kann zusätzlich vorteilhaft sein, wenn in einem Bereich angrenzend an die SLM die Kante HK(i) stromauf der Kante VK(i+1) vorgesehen ist und diese zwei Kanten einen Schnittpunkt bilden. Es ist vorteilhaft, wenn der Schnittpunkt im Bereich zwischen der SLQ und der HB, idealerweise näher an der SLQ, vorgesehen ist.

Die Teilabbildung P8 zeigt die erfindungsgemäße Variante einer Schaufelreihengruppe mit folgenden Merkmalen: an der VK(i) ist ein Kantentyp E, an der HK(i) ein Kantentyp E und an der VK(i+1) ein Kantentyp C vorgesehen. Die Kanten VK(i) und HK(i) sind von gleichem Kantentyp. Dabei kann es vorteilhaft sein, wenn diese Kanten den Punkt des Krümmungswechsels im Bereich zwischen SLQ und HB besitzen; in einem besonderen Fall kann der Punkt des Krümmungswechsels auf der SLQ vorgesehen sein. Die Kante HK(i) ist wenigstens teilweise stromab der Kante VK(i+1) angeordnet. Es ist vorteilhaft, wenn die Kanten HK(i) und VK(i+1) sich in einem Bereich angrenzend an die HB in Richtung der HB voneinander entfernen und wenn die VK(i+1) örtlich an der HB mit der HB einen spitzeren Winkel einschließt als die HK(i).

Es kann zusätzlich vorteilhaft sein, wenn an der HK(i+1) ebenfalls ein Kantentyp C vorgesehen ist. Es kann dabei zusätzlich vorteilhaft sein, wenn die Kanten HK(i) und HK(i+1) sich im Bereich zwischen der SLQ und der HB in Richtung der HB einander annähern und wenn die HK(i+1) örtlich an der HB mit der HB einen spitzeren Winkel einschließt als die HK(i). Es kann zusätzlich vorteilhaft sein, wenn die Kanten VK(i) und HK(i+1) sich im Bereich zwischen der SLQ und der HB in Richtung der HB einander annähern. Es kann zusätzlich vorteilhaft sein, wenn alle vier Schaufelkanten örtlich an der SLM mit der SLM im Wesentlichen (innerhalb einer Toleranz von 2°) einen rechten Winkel einschließen. Es kann zusätzlich vorteilhaft sein, wenn an allen vier Schaufelkanten örtlich an der HB zwischen der HB und derjeweiligen Kante ein spitzer Winkel von kleiner 75° vorgesehen ist. Es kann zusätzlich vorteilhaft sein, wenn in einem Bereich angrenzend an die SLM die Kante HK(i) stromauf der Kante VK(i+1) vorgesehen ist und diese zwei Kanten einen Schnittpunkt bilden. Es ist vorteilhaft, wenn der Schnittpunkt im Bereich zwischen der SLQ und der HB, idealerweise näher an der SLQ, vorgesehen ist.

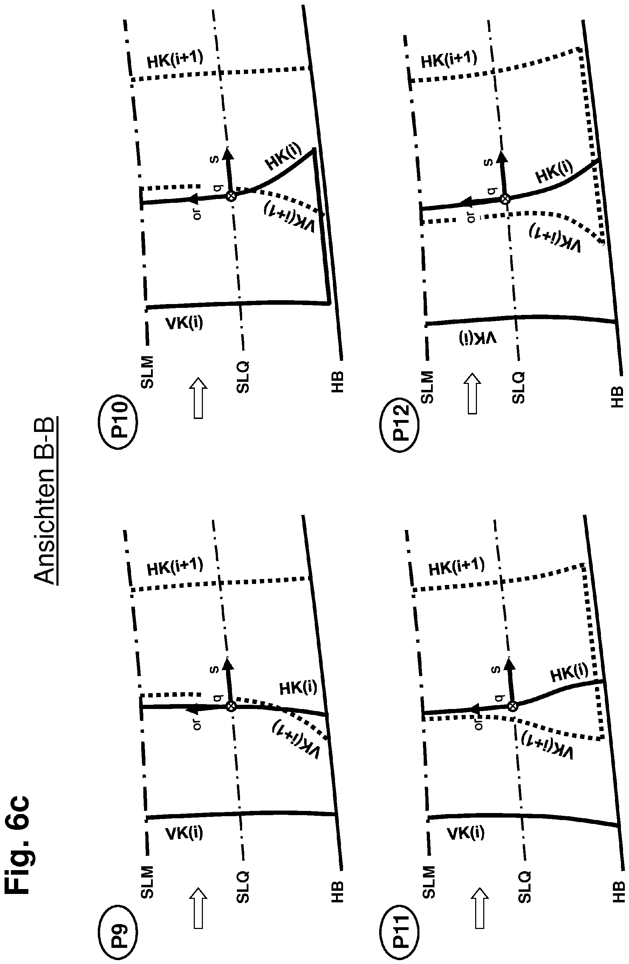

Die Teilabbildung P9 der Fig. 6c zeigt die erfindungsgemäße Variante einer Schaufelreihengruppe mit folgenden Merkmalen: an der VK(i) ist ein Kantentyp B, an der HK(i) ein Kantentyp B, an der VK(i+1) ein Kantentyp C und an der HK(i+1) ein Kantentyp B vorgesehen. Die Kanten VK(i), HK(i) und HK(i+1) sind von gleichem Kantentyp. Dabei kann es vorteilhaft sein, wenn die Kante VK(i+1) den Punkt maximaler Wölbung im Bereich zwischen SLQ und HB besitzt; in einem besonderen Fall kann der Punkt maximaler Wölbung auf der SLQ vorgesehen sein. Die Kante HK(i) ist wenigstens teilweise stromab der Kante VK(i+1) angeordnet. Es ist vorteilhaft, wenn die Kanten HK(i) und VK(i+1) sich in einem Bereich angrenzend an die HB in Richtung der HB voneinander entfernen und wenn die Kante VK(i+1) örtlich an der HB mit der HB einen spitzeren Winkel einschließt als die HK(i). Es kann dabei zusätzlich vorteilhaft sein, wenn die Kanten VK(i) und VK(i+1) sich im Bereich zwischen der SLQ und der HB in Richtung der HB einander annähern und wenn die Kante VK(i+1) örtlich an der HB mit der HB einen spitzeren Winkel einschließt als die VK(i).

Es kann zusätzlich vorteilhaft sein, wenn die Kanten VK(i) und HK(i) sich in einem Bereich angrenzend an die HB in Richtung der HB einander annähern. Es kann zusätzlich vorteilhaft sein, wenn alle vier Schaufelkanten örtlich an der SLM mit der SLM im Wesentlichen (innerhalb einer Toleranz von 2°) einen rechten Winkel einschließen. Es kann zusätzlich vorteilhaft sein, wenn örtlich an der HB nur zwischen der Kante VK(i+1) und der HB ein spitzer Winkel von kleiner 75° vorgesehen ist. Es kann zusätzlich vorteilhaft sein, wenn in einem Bereich angrenzend an die SLM die Kante HK(i) stromauf der Kante VK(i+1) vorgesehen ist und diese zwei Kanten einen Schnittpunkt bilden. Es ist vorteilhaft, wenn der Schnittpunkt im Bereich zwischen der SLQ und der HB, idealerweise näher an der SLQ, vorgesehen ist.

Die Teilabbildung P10 zeigt die erfindungsgemäße Variante einer Schaufelreihengruppe mit folgenden Merkmalen: die vordere und die hintere Schaufel besitzen spiegelbildlich gleiche Kantentypen, hier derart, dass an der VK(i) ein Kantentyp B, an der HK(i) ein Kantentyp D, an der VK(i+1) ein Kantentyp C und an der HK(i+1) ein Kantentyp B vorgesehen ist. Die Kanten VK(i) und HK(i+1) sind von gleichem Kantentyp. Dabei kann es vorteilhaft sein, wenn die Kanten HK(i) und VK(i+1) den Punkt maximaler Wölbung im Bereich zwischen SLQ und HB besitzen; in einem besonderen Fall kann der Punkt maximaler Wölbung auf der SLQ vorgesehen sein. Die Kante HK(i) ist wenigstens teilweise stromab der Kante VK(i+1) angeordnet.

Es ist vorteilhaft, wenn die Kanten HK(i) und VK(i+1) sich in einem Bereich angrenzend an die HB in Richtung der HB voneinander entfernen und wenn die Kante VK(i+1) örtlich an der HB mit der HB einen spitzeren Winkel und die HK(i) einen stumpfen Winkel einschließt. Es kann dabei zusätzlich vorteilhaft sein, wenn die Kanten VK(i) und VK(i+1) sich im Bereich zwischen der SLQ und der HB in Richtung der HB einander annähern und wenn die Kante VK(i+1) örtlich an der HB mit der HB einen spitzeren Winkel einschließt als die VK(i). Es kann zusätzlich vorteilhaft sein, wenn die Kanten HK(i) und HK(i+1) sich in einem Bereich angrenzend an die HB in Richtung der HB einander annähern und wenn die Kante HK(i) örtlich an der HB mit der HB einen stumpferen Winkel einschließt als die HK(i+1). Es kann zusätzlich vorteilhaft sein, wenn alle vier Schaufelkanten örtlich an der SLM mit der SLM im Wesentlichen (innerhalb einer Toleranz von 2°) einen rechten Winkel einschließen.

Es kann zusätzlich vorteilhaft sein, wenn örtlich an der HB zwischen der Kante VK(i+1) und der HB ein spitzer Winkel von kleiner 75° und zwischen der Kante HK(i) und der HB ein stumpfer Winkel von größer 105° vorgesehen ist. Es kann zusätzlich vorteilhaft sein, wenn in einem Bereich angrenzend an die SLM die Kante HK(i) stromauf der Kante VK(i+1) vorgesehen ist und diese zwei Kanten einen Schnittpunkt bilden. Es ist vorteilhaft, wenn der Schnittpunkt im Bereich zwischen der SLQ und der HB, idealerweise näher an der SLQ, vorgesehen ist.

Die Teilabbildung P11 zeigt die erfindungsgemäße Variante einer Schaufelreihengruppe mit folgenden Merkmalen: die vordere und die hintere Schaufel besitzen spiegelbildlich gleiche Kantentypen, hier derart, dass an der VK(i) ein Kantentyp C, an der HK(i) ein Kantentyp E, an der VK(i+1) ein Kantentyp F und an der HK(i+1) ein Kantentyp D vorgesehen ist. Die Kanten VK(i) und HK(i+1) sind von spiegelbildlich gleichem Kantentyp. Dabei kann es vorteilhaft sein, wenn die Kanten VK(i) und HK(i+1) den Punkt maximaler Wölbung im Bereich zwischen SLQ und HB besitzen; in einem besonderen Fall kann der Punkt maximaler Wölbung auf der SLQ vorgesehen sein. Die Kanten HK(i) und VK(i+1) sind von spiegelbildlich gleichem Kantentyp. Dabei kann es vorteilhaft sein, wenn die Kanten VK(i) und HK(i+1) den Punkt des Krümmungswechsels im Bereich zwischen SLQ und HB besitzen; in einem besonderen Fall kann der Punkt des Krümmungswechsels auf der SLQ vorgesehen sein. Die Kante HK(i) ist wenigstens teilweise stromab der Kante VK(i+1) angeordnet.

Es ist vorteilhaft, wenn die Kanten HK(i) und VK(i+1) sich in einem Bereich angrenzend an die HB in Richtung der HB voneinander entfernen. Es kann dabei zusätzlich vorteilhaft sein, wenn die Kanten VK(i) und VK(i+1) sich im Bereich zwischen der SLQ und der HB in Richtung der HB einander annähern. Es kann zusätzlich vorteilhaft sein, wenn die Kanten HK(i) und HK(i+1) sich in einem Bereich angrenzend an die HB in Richtung der HB einander annähern. Es kann zusätzlich vorteilhaft sein, wenn alle vier Schaufelkanten örtlich an der SLM mit der SLM im Wesentlichen (innerhalb einer Toleranz von 2°) einen rechten Winkel einschließen. Es kann zusätzlich vorteilhaft sein, wenn örtlich an der HB zwischen der Kante VK(i+1) und der HB ein spitzer Winkel und zwischen der Kante HK(i) und der HB ein stumpfer Winkel vorgesehen ist. Es kann zusätzlich vorteilhaft sein, wenn in einem Bereich angrenzend an die SLM die Kante HK(i) stromauf der Kante VK(i+1) vorgesehen ist und diese zwei Kanten einen Schnittpunkt bilden. Es ist vorteilhaft, wenn der Schnittpunkt im Bereich zwischen der SLQ und der HB, idealerweise näher an der SLQ, vorgesehen ist.

Die Teilabbildung P12 zeigt die erfindungsgemäße Variante einer Schaufelreihengruppe mit folgenden Merkmalen: die vordere und die hintere Schaufel besitzen spiegelbildlich gleiche Kantentypen, hier derart, dass an der VK(i) ein Kantentyp C, an der HK(i) ein Kantentyp D, an der VK(i+1) ein Kantentyp C und an der HK(i+1) ein Kantentyp D vorgesehen ist. Die Kanten VK(i) und HK(i+1) sind von spiegelbildlich gleichem Kantentyp. Die Kanten HK(i) und VK(i+1) sind von spiegelbildlich gleichem Kantentyp. Dabei kann es vorteilhaft sein, wenn die Kanten den Punkt maximaler Wölbung im Bereich zwischen SLQ und HB besitzen; in einem besonderen Fall kann der Punkt maximaler Wölbung auf der SLQ vorgesehen sein. Die Kante HK(i) ist wenigstens teilweise stromab der Kante VK(i+1) angeordnet (oder gar wie hier dargestellt gänzlich stromab von VK(i+1)).

Es ist vorteilhaft, wenn die Kanten HK(i) und VK(i+1) sich in einem Bereich angrenzend an die HB in Richtung der HB voneinander entfernen. Es kann dabei zusätzlich vorteilhaft sein, wenn die Kanten VK(i) und VK(i+1) sich im Bereich zwischen der SLQ und der HB in Richtung der HB einander annähern. Es kann zusätzlich vorteilhaft sein, wenn die Kanten HK(i) und HK(i+1) sich in einem Bereich angrenzend an die HB in Richtung der HB einander annähern. Es kann zusätzlich vorteilhaft sein, wenn alle vier Schaufelkanten örtlich an der SLM mit der SLM im Wesentlichen (innerhalb einer Toleranz von 2°) einen rechten Winkel einschließen. Es kann zusätzlich vorteilhaft sein, wenn örtlich an der HB zwischen der Kante VK(i+1) und der HB ein spitzer Winkel und zwischen der Kante HK(i) und der HB ein stumpfer Winkel vorgesehen ist. Es kann zusätzlich vorteilhaft sein, wenn in einem Bereich angrenzend an die SLM die Kante HK(i) stromauf der Kante VK(i+1) vorgesehen ist und diese zwei Kanten einen Schnittpunkt bilden. Es ist vorteilhaft, wenn der Schnittpunkt im Bereich zwischen der SLQ und der HB, idealerweise näher an der SLQ, vorgesehen ist.

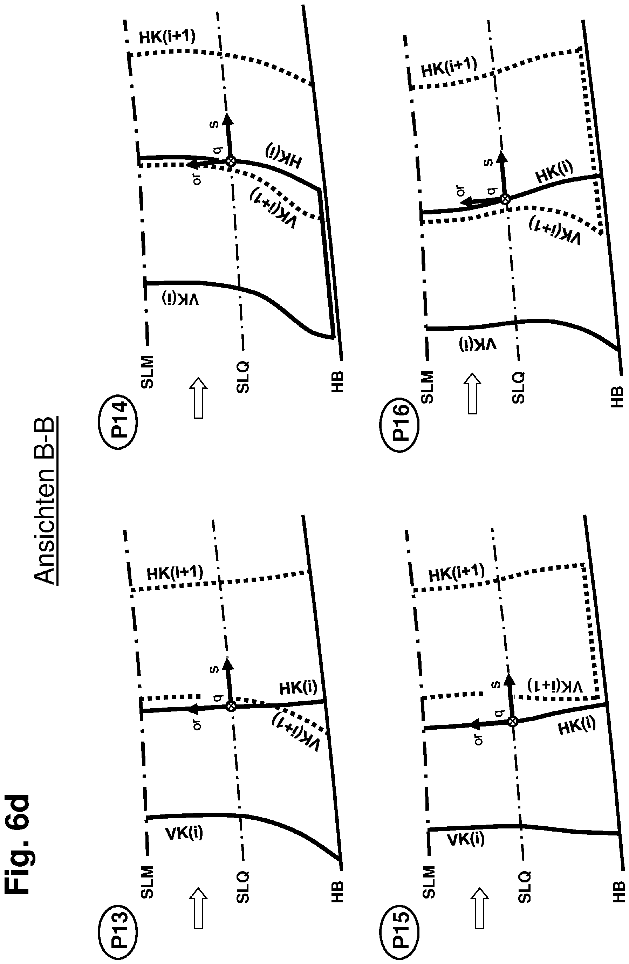

Die Teilabbildung P13 der Fig. 6d zeigt die erfindungsgemäße Variante einer Schaufelreihengruppe mit folgenden Merkmalen: die vordere und die hintere Schaufel besitzen gleiche Kantentypen, hier derart, dass an der VK(i) ein Kantentyp C, an der HK(i) ein Kantentyp B, an der VK(i+1) ein Kantentyp C und an der HK(i+1) ein Kantentyp B vorgesehen ist. Die Kanten VK(i) und VK(i+1) sind von gleichem Kantentyp. Dabei kann es vorteilhaft sein, wenn die Kanten VK(i) und VK(i+1) den Punkt maximaler Wölbung im Bereich zwischen SLQ und HB besitzen; in einem besonderen Fall kann der Punkt maximaler Wölbung auf der SLQ vorgesehen sein. Die Kanten HK(i) und HK(i+1) sind von gleichem Kantentyp. Die Kante HK(i) ist wenigstens teilweise stromab der Kante VK(i+1) angeordnet (oder gar gänzlich stromab der VK(i+1) wie hier nicht dargestellt).

Es kann vorteilhaft sein, wenn die Kanten VK(i) und VK(i+1) im Wesentlichen (innerhalb einer Toleranz von 2° lokalen Neigungswinkels) parallel verlaufen. Es kann zusätzlich vorteilhaft sein, wenn die Kanten HK(i) und HK(i+1) im Wesentlichen (innerhalb einer Toleranz von 2° lokalen Neigungswinkels) parallel verlaufen. Es kann zusätzlich vorteilhaft sein, wenn alle vier Schaufelkanten örtlich an der SLM mit der SLM im Wesentlichen (innerhalb einer Toleranz von 2°) einen rechten Winkel einschließen. Es kann zusätzlich vorteilhaft sein, wenn örtlich an der HB zwischen der Kante VK(i) und der HB ein spitzer Winkel von kleiner 75° und zwischen der Kante VK(i+1) und der HB ein spitzer Winkel von kleiner 75° vorgesehen ist. Es kann zusätzlich vorteilhaft sein, wenn in einem Bereich angrenzend an die SLM die Kante HK(i) stromauf der Kante VK(i+1) vorgesehen ist und diese zwei Kanten einen Schnittpunkt bilden. Es ist vorteilhaft, wenn der Schnittpunkt im Bereich zwischen der SLQ und der HB, idealerweise näher an der SLQ, vorgesehen ist.

Die Teilabbildung P14 zeigt die erfindungsgemäße Variante einer Schaufelreihengruppe mit folgenden Merkmalen: die vordere und die hintere Schaufel besitzen gleiche Kantentypen, hier derart, dass an der VK(i) ein Kantentyp F, an der HK(i) ein Kantentyp C, an der VK(i+1) ein Kantentyp F und an der HK(i+1) ein Kantentyp C vorgesehen ist. Die Kanten VK(i) und VK(i+1) sind von gleichem Kantentyp. Dabei kann es vorteilhaft sein, wenn die Kanten VK(i) und VK(i+1) den Punkt des Krümmungswechsels im Bereich zwischen SLQ und HB besitzen; in einem besonderen Fall kann der Punkt des Krümmungswechsels auf der SLQ vorgesehen sein. Die Kanten HK(i) und HK(i+1) sind von gleichem Kantentyp.

Dabei kann es vorteilhaft sein, wenn die Kanten HK(i) und HK(i+1) den Punkt maximaler Wölbung im Bereich zwischen SLQ und HB besitzen; in einem besonderen Fall kann der Punkt maximaler Wölbung auf der SLQ vorgesehen sein. Die Kante HK(i) ist wenigstens teilweise stromab der Kante VK(i+1) angeordnet (oder wie hier dargestellt gänzlich stromab der VK(i+1)). Es kann vorteilhaft sein, wenn die Kanten HK(i) und VK(i+1) in einem Bereich angegrenzend an die HB sich in Richtung der HB voneinanderentfernen. Es kann vorteilhaft sein, wenn die Kanten VK(i) und VK(i+1) im Wesentlichen (innerhalb einer Toleranz von 2° lokalen Neigungswinkels) parallel verlaufen. Es kann zusätzlich vorteilhaft sein, wenn die Kanten HK(i) und HK(i+1) im Wesentlichen (innerhalb einer Toleranz von 2° lokalen Neigungswinkels) parallel verlaufen. Es kann zusätzlich vorteilhaft sein, wenn alle vier Schaufelkanten örtlich an der SLM mit der SLM im Wesentlichen (innerhalb einer Toleranz von 2°) einen rechten Winkel einschließen.

Es kann zusätzlich vorteilhaft sein, wenn örtlich an der HB zwischen der Kante HK(i) und der HB ein spitzer Winkel von kleiner 75° und zwischen der Kante HK(i+1) und der HB ein spitzer Winkel von kleiner 75° vorgesehen ist. Es kann zusätzlich vorteilhaft sein, wenn in einem Bereich angrenzend an die SLM die Kante HK(i) stromauf der Kante VK(i+1) vorgesehen ist und diese zwei Kanten einen Schnittpunkt bilden. Es ist vorteilhaft, wenn der Schnittpunkt im Bereich zwischen der SLQ und der HB, idealerweise näher an der SLQ, vorgesehen ist.

Die Teilabbildung P15 zeigt die erfindungsgemäße Variante einer Schaufelreihengruppe mit folgenden Merkmalen: die vordere und die hintere Schaufel besitzen gleiche Kantentypen, hier derart, dass an der VK(i) ein Kantentyp F, an der HK(i) ein Kantentyp E, an der VK(i+1) ein Kantentyp F und an der HK(i+1) ein Kantentyp E vorgesehen ist. Die Kanten VK(i) und VK(i+1) sind von gleichem Kantentyp. Dabei kann es vorteilhaft sein, wenn die Kanten VK(i) und VK(i+1) den Punkt des Krümmungswechsels im Bereich zwischen SLQ und HB besitzen; in einem besonderen Fall kann der Punkt des Krümmungswechsels auf der SLQ vorgesehen sein. Die Kanten HK(i) und HK(i+1) sind von gleichem Kantentyp.

Dabei kann es vorteilhaft sein, wenn die Kanten HK(i) und HK(i+1) den Punkt des Krümmungswechsels im Bereich zwischen SLQ und HB besitzen; in einem besonderen Fall kann der Punkt des Krümmungswechsels auf der SLQ vorgesehen sein. Die Kante HK(i) ist wenigstens teilweise stromauf der Kante VK(i+1) angeordnet (oder wie hier dargestellt gänzlich stromauf der VK(i+1)). Es kann vorteilhaft sein, wenn die Kanten VK(i) und VK(i+1) im Wesentlichen (innerhalb einer Toleranz von 2° lokalen Neigungswinkels) parallel verlaufen. Es kann zusätzlich vorteilhaft sein, wenn die Kanten HK(i) und HK(i+1) im Wesentlichen (innerhalb einer Toleranz von 2° lokalen Neigungswinkels) parallel verlaufen. Es kann zusätzlich vorteilhaft sein, wenn alle vier Schaufelkanten örtlich an der SLM mit der SLM im Wesentlichen (innerhalb einer Toleranz von 2°) einen rechten Winkel einschließen.

Es kann zusätzlich vorteilhaft sein, wenn örtlich an der HB zwischen der Kante VK(i) und der HB ein spitzer Winkel von kleiner 75° und zwischen der Kante VK(i+1) und der HB ein spitzer Winkel von kleiner 75° vorgesehen ist. Es kann aber auch vorteilhaft sein, wenn in einem Bereich angrenzend an die HB die Kante HK(i) stromab der Kante VK(i+1) vorgesehen ist. Es kann dabei weiter vorteilhaft sein, wenn die Kanten HK(i) unf VK(i+1) einen Schnittpunkt bilden. Es ist vorteilhaft, wenn der Schnittpunkt im Bereich zwischen der SLQ und der HB, idealerweise näher an der SLQ, vorgesehen ist.

Die Teilabbildung P16 zeigt die erfindungsgemäße Variante einer Schaufelreihengruppe mit folgenden Merkmalen: die vordere und die hintere Schaufel besitzen gleiche Kantentypen, hier derart, dass an der VK(i) ein Kantentyp E, an der HK(i) ein Kantentyp E, an der VK(i+1) ein Kantentyp E und an der HK(i+1) ein Kantentyp E vorgesehen ist. Die Kanten VK(i), HK(i), VK(i+1) und HK(i+1) sind von gleichem Kantentyp. Dabei kann es vorteilhaft sein, wenn die Kanten den Punkt des Krümmungswechsels im Bereich zwischen SLQ und HB besitzen; in einem besonderen Fall kann der Punkt des Krümmungswechsels auf der SLQ vorgesehen sein. Die Kante HK(i) ist wenigstens teilweise stromab der Kante VK(i+1) angeordnet (oder wie hier dargestellt gänzlich stromab der VK(i+1)).

Es kann vorteilhaft sein, wenn die Kanten HK(i) und VK(i+1) sich in einem Bereich angrenzend an die HB in Richtung der HB voneinander entfernen. Es kann vorteilhaft sein, wenn die Kanten VK(i) und VK(i+1) im Wesentlichen (innerhalb einer Toleranz von 2° lokalen Neigungswinkels) parallel verlaufen. Es kann zusätzlich vorteilhaft sein, wenn die Kanten HK(i) und HK(i+1) im Wesentlichen (innerhalb einer Toleranz von 2° lokalen Neigungswinkels) parallel verlaufen. Es kann zusätzlich vorteilhaft sein, wenn alle vier Schaufelkanten örtlich an der SLM mit der SLM im Wesentlichen (innerhalb einer Toleranz von 2°) einen rechten Winkel einschließen.

Es kann zusätzlich vorteilhaft sein, wenn örtlich an der HB zwischen der Kante VK(i) und der HB ein spitzer Winkel von kleiner 75° und zwischen der Kante VK(i+1) und der HB ein spitzer Winkel von kleiner 75° vorgesehen ist. Es kann zusätzlich vorteilhaft sein, wenn örtlich an der HB zwischen der Kante HK(i) und der HB ein Winkel zwischen 75° und 105% und zwischen der Kante HK(i+1) und der HB ein Winkel zwischen 75° und 105% vorgesehen ist. Es kann auch vorteilhaft sein, wenn in einem Bereich angrenzend an die SLM die Kante HK(i) stromauf der Kante VK(i+1) vorgesehen ist und diese beiden Kanten einen Schnittpunkt bilden. Es ist vorteilhaft, wenn der Schnittpunkt im Bereich zwischen der SLQ und der HB, idealerweise näher an der SLQ, vorgesehen ist.

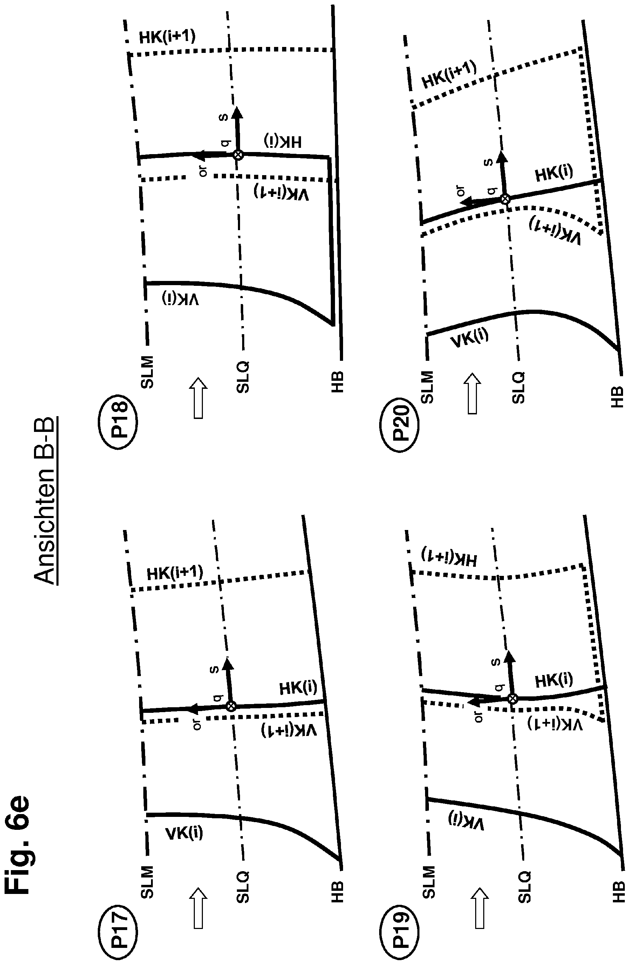

Die Teilabbildung P17 der Fig. 6e zeigt die erfindungsgemäße Variante einer Schaufelreihengruppe mit folgenden Merkmalen: drei Kanten besitzen gleichen Kantentyp, hier derart, dass an der VK(i) ein Kantentyp C, an der HK(i) ein Kantentyp B, an der VK(i+1) ein Kantentyp B und an der HK(i+1) ein Kantentyp B vorgesehen ist. Es kann von Vorteil sein, wenn an der HK(i) ein Kantentyp A, an der VK(i+1) ein Kantentyp A und an der HK(i+1) ein Kantentyp A vorgesehen ist. Die Kanten HK(i), VK(i+1) und HK(i+1) sind von gleichem Kantentyp. Dabei kann es vorteilhaft sein, wenn die Kante VK(i) den Punkt maximaler Wölbung im Bereich zwischen SLQ und HB besitzt; in einem besonderen Fall kann der Punkt maximaler Wölbung auf der SLQ vorgesehen sein.

Die Kante HK(i) ist wenigstens teilweise stromab der Kante VK(i+1) angeordnet (oder wie hier dargestellt gänzlich stromab der VK(i+1)). Es kann vorteilhaft sein, wenn die Kanten HK(i) und VK(i+1) sich in einem Bereich angrenzend an die HB in Richtung der HB voneinander entfernen. Es kann vorteilhaft sein, wenn die Kanten VK(i) und VK(i+1) sich in einem Bereich angrenzend an die HB in Richtung der HB voneinander entfernen. Es kann zusätzlich vorteilhaft sein, wenn die Kanten VK(i+1) und HK(i+1) im Wesentlichen (innerhalb einer Toleranz von 2° lokalen Neigungswinkels) parallel verlaufen. Es kann zusätzlich vorteilhaft sein, wenn die Kanten HK(i) und HK(i+1) im Wesentlichen (innerhalb einer Toleranz von 2° lokalen Neigungswinkels) parallel verlaufen.

Es kann zusätzlich vorteilhaft sein, wenn alle vier Schaufelkanten örtlich an der SLM mit der SLM im Wesentlichen (innerhalb einer Toleranz von 2°) einen rechten Winkel einschließen. Es kann zusätzlich vorteilhaft sein, wenn örtlich an der HB zwischen der Kante VK(i) und der HB ein spitzer Winkel von kleiner 75° vorgesehen ist. Es kann zusätzlich vorteilhaft sein, wenn örtlich an der HB zwischen der Kante HK(i) und der HB ein Winkel zwischen 75° und 105% und zwischen der Kante HK(i+1) und der HB ein Winkel zwischen 75° und 105% vorgesehen ist. Es kann zusätzlich vorteilhaft sein, wenn örtlich an der HB mit der HB die Kanten HK(i) und HK(i+1) im Wesentlichen (innerhalb einer Toleranz von 2°) einen rechten Winkel einschließen. Es kann zusätzlich vorteilhaft sein, wenn örtlich an der HB mit der HB die Kante VK(i+1) im Wesentlichen (innerhalb einer Toleranz von 2°) einen rechten Winkel einschließt. Es kann auch vorteilhaft sein, wenn in einem Bereich angrenzend an die SLM die Kante HK(i) stromauf der Kante VK(i+1) vorgesehen ist und diese beiden Kanten einen Schnittpunkt bilden. Es ist vorteilhaft, wenn der Schnittpunkt im Bereich zwischen der SLQ und der HB, idealerweise näher an der SLQ, vorgesehen ist.

Die Teilabbildung P18 zeigt die erfindungsgemäße Variante einer Schaufelreihengruppe mit folgenden Merkmalen: alle Kanten besitzen gleichen Kantentyp, hier derart, dass an der VK(i) ein Kantentyp C, an der HK(i) ein Kantentyp C, an der VK(i+1) ein Kantentyp C und an der HK(i+1) ein Kantentyp C vorgesehen ist. Dabei kann es vorteilhaft sein, wenn die Kante VK(i) den Punkt maximaler Wölbung im Bereich zwischen SLQ und HB besitzt; in einem besonderen Fall kann der Punkt maximaler Wölbung auf der SLQ vorgesehen sein. Dabei kann es vorteilhaft sein, wenn für die Kanten HK(i), VK(i+1) und HK(i+1) den Punkt maximaler Wölbung näher an der SLQ als an HB oder SLM vorgesehen ist; in einem besonderen Fall kann der Punkt maximaler Wölbung auf der SLQ vorgesehen sein. Die Kante HK(i) ist wenigstens teilweise stromab der Kante VK(i+1) angeordnet (oder wie hier dargestellt gänzlich stromab der VK(i+1)).

Es kann vorteilhaft sein, wenn die Kanten HK(i) und VK(i+1) sich in einem Bereich angrenzend an die HB in Richtung der HB voneinander entfernen. Es kann vorteilhaft sein, wenn die Kanten VK(i) und VK(i+1) sich in einem Bereich angrenzend an die HB in Richtung der HB voneinander entfernen. Es kann zusätzlich vorteilhaft sein, wenn die Kanten VK(i+1) und HK(i+1) im Wesentlichen (innerhalb einer Toleranz von 2° lokalen Neigungswinkels) parallel verlaufen. Es kann zusätzlich vorteilhaft sein, wenn die Kanten HK(i) und HK(i+1) im Wesentlichen (innerhalb einer Toleranz von 2° lokalen Neigungswinkels) parallel verlaufen. Es kann zusätzlich vorteilhaft sein, wenn alle vier Schaufelkanten örtlich an der SLM mit der SLM im Wesentlichen (innerhalb einer Toleranz von 2°) einen rechten Winkel einschließen.

Es kann zusätzlich vorteilhaft sein, wenn örtlich an der HB zwischen der Kante VK(i) und der HB ein spitzer Winkel von kleiner 75° vorgesehen ist. Es kann zusätzlich vorteilhaft sein, wenn örtlich an der HB zwischen der Kante HK(i) und der HB ein Winkel zwischen 75° und 105% und zwischen der Kante HK(i+1) und der HB ein Winkel zwischen 75° und 105% vorgesehen ist. Es kann zusätzlich vorteilhaft sein, wenn örtlich an der HB mit der HB die Kanten HK(i) und HK(i+1) im Wesentlichen (innerhalb einer Toleranz von 2°) einen rechten Winkel einschließen. Es kann zusätzlich vorteilhaft sein, wenn örtlich an der HB mit der HB die Kante VK(i+1) im Wesentlichen (innerhalb einer Toleranz von 2°) einen rechten Winkel einschließt. Es kann auch vorteilhaft sein, wenn in einem Bereich angrenzend an die SLM die Kante HK(i) stromauf der Kante VK(i+1) vorgesehen ist und diese beiden Kanten einen Schnittpunkt bilden. Es ist vorteilhaft, wenn der Schnittpunkt im Bereich zwischen der SLQ und der HB, idealerweise näher an der SLQ, vorgesehen ist.

Die Teilabbildung P19 zeigt die erfindungsgemäße Variante einer Schaufelreihengruppe mit folgenden Merkmalen: wenigstens zwei Kanten besitzen gleichen Kantentyp, hier derart, dass an der VK(i) ein Kantentyp C, an der HK(i) ein Kantentyp D, an der VK(i+1) ein Kantentyp E und an der HK(i+1) ein Kantentyp D vorgesehen ist. Die Hinterkanten besitzen gleichen Kantentyp. Es kann vorteilhaft sein, wenn die Kante VK(i) den Punkt maximaler Wölbung im Bereich zwischen SLQ und HB besitzt; in einem besonderen Fall kann der Punkt maximaler Wölbung auf der SLQ vorgesehen sein.

Es kann aber auch vorteilhaft sein, wenn an der Kante VK(i+1) ein Kantentyp C vorgesehen ist, sodass jeweils die Vorderkanten und die Hinterkanten von gleichem Kantentyp sind. Dabei kann es vorteilhaft sein, wenn die Kante VK(i+1) den Punkt maximaler Wölbung im Bereich zwischen SLQ und HB besitzt; in einem besonderen Fall kann der Punkt maximaler Wölbung auf der SLQ vorgesehen sein. Es kann zusätzlich vorteilhaft sein, wenn für die Kanten HK(i) und HK(i+1) der Punkt maximaler Wölbung näher an der SLQ als an der HB oder der SLM vorgesehen ist; in einem besonderen Fall kann der Punkt maximaler Wölbung auf der SLQ vorgesehen sein. Die Kante HK(i) ist wenigstens teilweise stromab der Kante VK(i+1) angeordnet (oder wie hier dargestellt gänzlich stromab der VK(i+1)).

Es kann vorteilhaft sein, wenn die Kanten HK(i) und VK(i+1) sich in einem Bereich angrenzend an die HB in Richtung der HB voneinander entfernen. Es kann vorteilhaft sein, wenn die Kanten VK(i+1) und HK(i+1) sich in einem Bereich angrenzend an die HB in Richtung der HB voneinander entfernen. Es kann zusätzlich vorteilhaft sein, wenn die Kanten HK(i) und HK(i+1) im Wesentlichen (innerhalb einer Toleranz von 2° lokalen Neigungswinkels) parallel verlaufen. Es kann zusätzlich vorteilhaft sein, wenn wenigstens zwei der vier Schaufelkanten örtlich an der SLM mit der SLM einen spitzen Winkel kleiner 85° einschließen. Dabei kann günstig sein, wenn wenigstens zwei der vier Schaufelkanten örtlich an der SLM mit der SLM einen spitzen Winkel zwischen 65° und 80° einschließen. Es kann zusätzlich vorteilhaft sein, wenn alle vier Schaufelkanten örtlich an der SLM mit der SLM einen spitzen Winkel kleiner 85° einschließen. Dabei kann günstig sein, wenn alle vier Schaufelkanten örtlich an der SLM mit der SLM einen spitzen Winkel zwischen 65° und 80° einschließen.

Es kann zusätzlich vorteilhaft sein, wenn örtlich an der HB zwischen der Kante VK(i) und der HB ein spitzer Winkel von kleiner 75° vorgesehen ist. Es kann zusätzlich vorteilhaft sein, wenn örtlich an der HB zwischen der Kante HK(i) und der HB ein Winkel zwischen 75° und 105° und zwischen der Kante HK(i+1) und der HB ein Winkel zwischen 75° und 105° vorgesehen ist. Es kann zusätzlich vorteilhaft sein, wenn örtlich an der HB mit der HB die Kanten HK(i) und HK(i+1) im Wesentlichen (innerhalb einer Toleranz von 2°) einen rechten Winkel einschließen. Es kann zusätzlich vorteilhaft sein, wenn örtlich an der HB mit der HB die Kante VK(i+1) einen Winkel kleiner 75° einschließt. Es kann auch vorteilhaft sein, wenn in einem Bereich angrenzend an die SLM die Kante HK(i) stromauf der Kante VK(i+1) vorgesehen ist und diese beiden Kanten einen Schnittpunkt bilden. Es ist vorteilhaft, wenn der Schnittpunkt im Bereich zwischen der SLQ und der HB, idealerweise näher an der SLQ, vorgesehen ist.

Die Teilabbildung P20 zeigt die erfindungsgemäße Variante einer Schaufelreihengruppe mit folgenden Merkmalen: wenigstens zwei Kanten besitzen gleichen Kantentyp, hier derart, dass an der VK(i) ein Kantentyp C, an der HK(i) ein Kantentyp A, an der VK(i+1) ein Kantentyp C und an der HK(i+1) ein Kantentyp A vorgesehen ist. Die Hinterkanten besitzen gleichen Kantentyp. Die Vorderkanten besitzen gleichen Kantentyp. Es kann vorteilhaft sein, wenn die Kanten VK(i) und VK(i+1) den Punkt maximaler Wölbung im Bereich zwischen SLQ und HB besitzt; in einem besonderen Fall kann der Punkt maximaler Wölbung auf der SLQ vorgesehen sein.

Es kann aber auch vorteilhaft sein, wenn an den Kanten HK(i) und HK(i+1) ein Kantentyp C vorgesehen ist, sodass die Vorder- und die Hinterkanten von gleichem Kantentyp sind. Dabei kann es vorteilhaft sein, wenn die Kanten HK(i) und HK(i+1) den Punkt maximaler Wölbung im Bereich zwischen SLQ und HB besitzen. Es kann zusätzlich vorteilhaft sein, wenn für die Kanten HK(i) und HK(i+1) der Punkt maximaler Wölbung näher an der SLQ als an der HB oder der SLM vorgesehen ist; in einem besonderen Fall kann der Punkt maximaler Wölbung auf der SLQ vorgesehen sein. Die Kante HK(i) ist wenigstens teilweise stromab der Kante VK(i+1) angeordnet (oder wie hier dargestellt gänzlich stromab der VK(i+1)).

Es kann vorteilhaft sein, wenn die Kanten HK(i) und VK(i+1) sich in einem Bereich angrenzend an die HB in Richtung der HB voneinander entfernen. Es kann vorteilhaft sein, wenn die Kanten VK(i+1) und HK(i+1) sich in einem Bereich angrenzend an die HB in Richtung der HB voneinander entfernen. Es kann vorteilhaft sein, wenn die Kanten VK(i) und HK(i) sich in einem Bereich angrenzend an die HB in Richtung der HB voneinander entfernen. Es kann zusätzlich vorteilhaft sein, wenn die Kanten VK(i) und VK(i+1) im Wesentlichen (innerhalb einer Toleranz von 2° lokalen Neigungswinkels) parallel verlaufen. Es kann zusätzlich vorteilhaft sein, wenn die Kanten HK(i) und HK(i+1) im Wesentlichen (innerhalb einer Toleranz von 2° lokalen Neigungswinkels) parallel verlaufen. Es kann zusätzlich vorteilhaft sein, wenn wenigstens zwei der vier Schaufelkanten örtlich an der SLM mit der SLM einen stumpfen Winkel größer 95° einschließen.

Dabei kann es günstig sein, wenn wenigstens zwei der vier Schaufelkanten örtlich an der SLM mit der SLM einen stumpfen Winkel zwischen 100° und 115° einschließen. Es kann zusätzlich vorteilhaft sein, wenn alle vier Schaufelkanten örtlich an der SLM mit der SLM einen stumpfen Winkel größer 95° einschließen. Dabei kann günstig sein, wenn alle vier Schaufelkanten örtlich an der SLM mit der SLM einen stumpfen Winkel zwischen 100° und 115° einschließen. Es kann zusätzlich vorteilhaft sein, wenn örtlich an der HB zwischen der Kante VK(i) und der HB ein spitzer Winkel von kleiner 75° vorgesehen ist.

Es kann zusätzlich vorteilhaft sein, wenn örtlich an der HB zwischen der Kante VK(i+1) und der HB ein spitzer Winkel von kleiner 75° vorgesehen ist. Es kann zusätzlich vorteilhaft sein, wenn örtlich an der HB zwischen der Kante HK(i) und der HB ein Winkel zwischen 75° und 105° und zwischen der Kante HK(i+1) und der HB ein Winkel zwischen 75° und 105° vorgesehen ist. Es kann zusätzlich vorteilhaft sein, wenn örtlich an der HB mit der HB die Kanten HK(i) und HK(i+1) im Wesentlichen (innerhalb einer Toleranz von 2°) einen rechten Winkel einschließen. Es kann auch vorteilhaft sein, wenn in einem Bereich angrenzend an die SLM die Kante HK(i) stromauf der Kante VK(i+1) vorgesehen ist und diese beiden Kanten einen Schnittpunkt bilden. Es ist vorteilhaft, wenn der Schnittpunkt im Bereich zwischen der SLQ und der HB, idealerweise näher an der SLQ, vorgesehen ist.

Weiterhin vorteilhaft kann es sein, wenn in wenigstens einem an eine der Hauptströmungspfadberandungen (Nabe und Gehäuse) angrenzenden Bereich der Schaufelhöhe zwischen dem vorderen Abschnitt der Saugseite einer Schaufel einer Mitgliedsschaufelreihe (i+1) und dem hinteren Abschnitt der Druckseite einer Schaufel einer Mitgliedsschaufelreihe (i) eine Nebenpassage vorgesehen ist, die die Strömung örtlich führt und das Interferenzverhalten der Mitgliedschaufelreihen (i) und (i+1) entlang der Schaufelhöhe günstig abstimmt.

Die vorliegende Figurenbeschreibung beschreibt die Lage und Form bzw. den Verlauf von Schaufelkanten zwischen der mittleren Meridionalstromlinie (SLM) und einer der Hauptströmungspfadberandungen (HB). Zur anderen der beiden Hauptströmungspfadberandungen kann ausgehend von der mittleren Meridionalstromlinie (SLM) eine entsprechende Lage und Form bzw. ein entsprechender Verlauf der Schaufelkanten realisiert sein, wobei - bezogen auf die mittlere Meridionalstromlinie (SLM) - sowohl symmetrische und asymmetrische Verläufe der Schaufelkanten realisiert sein können.

So kann sich ein vorteilhaftes Strömungsverhalten in einer erfindungsgemäßen Schaufelgruppe ergeben, wenn im Bereich der Schaufelenden an Nabe und Gehäuse angrenzend an die jeweilige Hauptströmungspfadberandung jeweils wenigstens eines der im obigen Text beschriebenen Merkmale vorgesehen ist. Dabei kann vorgesehen sein, dass im Bereich der Nabe und des Gehäuses mindestens ein gleiches Merkmal oder auch vollständig gleiche Merkmale vorgesehen sind.

## Patentansprüche

1. Schaufelreihengruppe anordbar in einem Hauptströmungspfad einer Strömungsmaschine und bestehend aus N benachbarten und sowohl in Meridionalrichtung (m) als auch in Umfangsrichtung (u) relativ zueinander fest angeordneten Mitgliedsschaufelreihen, wobei die Anzahl N der Mitgliedsschaufelreihen größer gleich 2 ist und (i) den Laufindex mit Werten zwischen 1 und N kennzeichnet, wobei eine vordere Mitgliedsschaufelreihe mit vorderen Schaufeln (i) mit Vorderkante VK(i) und Hinterkante HK(i) sowie eine hintere Mitgliedsschaufelreihe mit hinteren Schaufeln (i+1) mit Vorderkante VK(i+1) und Hinterkante HK(i+1) gegeben sind, wobei
- die Schaufelreihengruppe zwei Hauptströmungspfadberandungen (HB) aufweist,
- die Vorderkante VK(i+1) mindestens einer Schaufel (i+1) der hinteren Mitgliedsschaufelreihe in der Umgebung einer Schaufel (i) der vorderen Mitgliedsschaufelreihe (i) vorgesehen ist,
- die Kanten der Schaufeln (i, i+1) der Schaufelreihengruppen zwischen einer Hauptströmungspfadberandung (HB) und einer mittleren Meridionalstromlinie (SLM) in der Hauptströmungspfadmitte betrachtet werden,
- wobei bei Betrachtung der Schaufelreihengruppe in einer durch die Meridionalrichtung (m) und die Umfangskoordinate (u) gegebenen Ebene (Meridionalstromlinienschnitt) die Sehne der vorderen Schaufel Se(i) als die druckseitig an das Profil der vorderen Schaufel (i) angelegte Tangente definiert ist und die Sehne der hinteren Schaufel Se(i+1) als die druckseitig an das Profil der hinteren Schaufel (i+1) angelegte Tangente definiert ist,
- der Staffelungswinkel der vorderen Schaufel lambda(i) und der Staffelungswinkel der hinteren Schaufel lambda(i+1) als Neigungswinkel der jeweiligen Sehne gegen die Meridionalrichtung (m) definiert sind,
- der mittlere Staffelungswinkel lambdam als Mittelwert der Staffelungswinkel lambda(i) und lambda(i+1) definiert ist, gemäß lambdam= (lambda(i)+lambda(i+1)) / 2,
- ein Hilfskoordinatensystem mit einer ersten, einer zweiten und einer dritten Koordinatenrichtung (s, q, or) gegeben ist, die erste Koordinatenrichtung (s) unter dem Winkel lambdam gegen die Meridionalrichtung m stromabwärts weist, die zweite Koordinatenrichtung (q) senkrecht zur ersten Koordinatenrichtung (s) von der Druckseite der vorderen Schaufel (i) weg weist, und die dritte Koordinatenrichtung (or) senkrecht auf der ersten Koordinatenrichtung (s) und der zweiten Koordinatenrichtung (q),
- wobei der Wölbungsgrad WG einer Schaufelkante als größter feststellbarer Abstand (d) zwischen der betreffenden Schaufelkante selbst und der geradlinigen Verbindung der Schaufelkantenpunkte an der mittleren Meridionalstromlinie (SLM) und der Hauptströmungspfadberandung (HB), bezogen auf die senkrecht zur ersten Koordinatenrichtung (s) an der Schaufelkante zwischen der mittleren Meridionalstromlinie (SLM) und der Hauptströmungspfadberandung (HB) gemessenen Weite dor definiert ist, gemäß WG=d/dor,
- wobei die Schaufelkanten VK(i), HK(i), VK(i+1) und HK(i+1) jeweils einem einer Mehrzahl von Kantentypen zuordbar sind, die durch die Krümmung des Kantenverlaufs und/oder die Anzahl von Krümmungswechseln und/oder den Wölbungsgrad definiert sind,
- wobei eine qualitative Gleichheit zweier Schaufelkanten VK(i), HK(i), VK(i+1), HK(i+1) dann gegeben ist, wenn die Schaufelkanten von selben Kantentyp sind oder nach Spiegelung einer der Schaufelkanten vom selben Kantentyp sind,
**dadurch gekennzeichnet, dass**
im Bereich zwischen der mittleren Meridionalstromlinie (SLM) und einer der Hauptströmungspfadberandungen (HB) in einer Ansicht senkrecht zur ersten und senkrecht zur dritten Koordinatenrichtung (s, or) für wenigstens zwei Kanten VK(i), HK(i), VK(i+1), HK(i+1) der Schaufelreihengruppe bezüglich ihres Kantentyps eine qualitative Gleichheit vorgesehen ist.

2. Schaufelreihengruppe nach Anspruch 1, **dadurch gekennzeichnet, dass** die qualitative Gleichheit der mindestens zwei Schaufelkanten VK(i), HK(i), VK(i+1), HK(i+1) an Schaufelkanten unterschiedlicher Schaufelreihen (i, i+1) der Schaufelreihengruppe vorgesehen ist.

3. Schaufelreihengruppe nach einem der Ansprüche 1 oder 2, **dadurch gekennzeichnet, dass** die qualitative Gleichheit der mindestens zwei Schaufelkanten VK(i), HK(i), VK(i+1), HK(i+1) an derselben Schaufelreihe (i, i+1) der Schaufelreihengruppe vorgesehen ist.

4. Schaufelreihengruppe nach Anspruch 3, **dadurch gekennzeichnet, dass** eine qualitative Gleichheit für die Schaufelkanten VK(i) und HK(i) der vorderen Schaufel (i) vorgesehen ist.

5. Schaufelreihengruppe nach einem der vorangehenden Ansprüche, **dadurch gekennzeichnet, dass** die qualitative Gleichheit an mindestens drei Schaufelkanten VK(i), HK(i), VK(i+1), HK(i+1) einer vorderen Schaufel (i) und einer hinteren Schaufel (i+1) der Schaufelreihengruppe vorgesehen ist.

6. Schaufelreihengruppe nach einem der vorangehenden Ansprüche, **dadurch gekennzeichnet, dass** die qualitative Gleichheit an allen vier Schaufelkanten VK(i), HK(i), VK(i+1), HK(i+1) einer vorderen Schaufel (i) und einer hinteren Schaufel (i+1) der Schaufelreihengruppe vorgesehen ist.

7. Schaufelreihengruppe nach einem der vorangehenden Ansprüche, **dadurch gekennzeichnet, dass** eine gleichsinnige qualitative Gleichheit der betroffenen Schaufelkanten VK(i), HK(i), VK(i+1), HK(i+1) vorgesehen ist d. h. die Schaufelkanten VK(i), HK(i), VK(i+1) und HK(i+1) vom selben Kantentyp sind.

8. Schaufelreihengruppe nach einem der vorangehenden Ansprüche, **dadurch gekennzeichnet, dass** an wenigstens einer der Schaufelkanten VK(i), HK(i), VK(i+1), HK(i+1) ein Krümmungswechselpunkt im Bereich zwischen der Viertelmeridionalstromlinie (SLQ) und der Hauptströmungspfadberandung (HB) vorgesehen ist.

9. Schaufelreihengruppe nach einem der vorangehenden Ansprüche, **dadurch gekennzeichnet, dass** an wenigstens einer der Schaufelkanten VK(i), HK(i), VK(i+1), HK(i+1) ein Krümmungswechselpunkt im Bereich zwischen der Viertelmeridionalstromlinie (SLQ) und der mittleren Meridionalstromlinie (SLM) vorgesehen ist.

10. Schaufelreihengruppe nach Anspruch 8 oder 9, **dadurch gekennzeichnet, dass** der Krümmungswechselpunkt näher an der Viertelmeridionalstromlinie (SLQ) vorgesehen ist.

11. Schaufelreihengruppe nach einem der vorangehenden Ansprüche, **dadurch gekennzeichnet, dass** wenigstens an beiden Vorderkanten VK(i) und VK(i+1) der vorderen Schaufel (i) und der hinteren Schaufel (i+1) ein Kippwinkel kleiner null vorgesehen ist, wobei der Kippwinkel (alpha) einer Schaufelkante zwischen der geradlinigen Verbindung der Schaufelkantenpunkte an der mittleren Meridionalstromlinie SLM und der Hauptströmungspfadberandung HB und einer Senkrechten auf der Viertelmeridionalstromlinie SLQ gemessen und bei Betrachtung der Schaufelreihengruppe mit einer Durchströmung von links nach rechts und der Hauptströmungspfadberandung HB als unterer Begrenzung im Urzeigersinn positiv gezählt wird.

12. Schaufelreihengruppe nach einem der vorangehenden Ansprüche, **dadurch gekennzeichnet, dass** wenigstens an beiden Hinterkanten HK(i) und HK(i+1) der vorderen Schaufel (i) und der hinteren Schaufel (i+1) ein Kippwinkel kleiner null vorgesehen ist.

13. Schaufelreihengruppe nach einem der vorangehenden Ansprüche, **dadurch gekennzeichnet, dass** wenigstens an beiden Hinterkanten HK(i) und HK(i+1) der vorderen Schaufel (i) und der hinteren Schaufel (i+1) ein Kippwinkel größer null vorgesehen ist.

14. Schaufelreihengruppe nach einem der vorangehenden Ansprüche, **dadurch gekennzeichnet, dass** als Kantentypen definiert sind:
- als Kantentyp A: es liegt ein im wesentlichen linearer Verlauf vor, mit sehr kleinem Wölbungsgrad von WG < 0,003;
- als Kantentyp B: es liegt ein schwach gekrümmter Verlauf vor, mit kleinem Wölbungsgrad von 0,003 < WG < 0,01;
- als Kantentyp C: es liegt ein teilweise gekrümmter Verlauf ohne Krümmungswechsel und mit einem Wölbungsgrad von WG > 0,01 und mit einem Abschnitt mit stromaufwärts konkaver Krümmung vor;
- als Kantentyp D: es liegt ein teilweise gekrümmter Verlauf ohne Krümmungswechsel und mit einem Wölbungsgrad von WG > 0,01 und mit einem Abschnitt mit stromaufwärts konvexer Krümmung vor;
- als Kantentyp E: es liegt ein teilweise gekrümmter Verlauf mit einem Krümmungswechsel und mit einem Wölbungsgrad von WG > 0,01 und mit einem Abschnitt zwischen dem Krümmungswechselpunkt und der Hauptströmungspfadberandung (HB) mit stromaufwärts konkaver Krümmung vor;
- als Kantentyp F: es liegt ein teilweise gekrümmter Verlauf mit einem Krümmungswechsel und mit einem Wölbungsgrad von WG > 0,01 und mit einem Abschnitt zwischen dem Krümmungswechselpunkt und der Hauptströmungspfadberandung (HB) mit stromaufwärts konvexer Krümmung vor;
- als Kantentyp G: es liegt ein teilweise gekrümmter Verlauf mit zwei Krümmungswechseln und mit einem Wölbungsgrad von WG > 0,01 und mit einem Abschnitt zwischen den beiden Krümmungswechselpunkten mit stromaufwärts konkaver Krümmung vor; und
- als Kantentyp H: es liegt ein teilweise gekrümmter Verlauf mit zwei Krümmungswechseln und mit einem Wölbungsgrad von WG > 0,01 und einem Abschnitt zwischen den beiden Krümmungswechselpunkten mit stromaufwärts konvexer Krümmung vor.

## Claims

1. Blade row group arrangeable in a main flow path of a fluid-flow machine and including N adjacent member blade rows firmly arranged relative to each other in both the meridional direction (m) and the circumferential direction (u), with the number N of the member blade rows being greater than/ equal to 2 and (i) designating the running index with values between 1 and N, with a front member blade row with front blades (i) having a leading edge VK(i) and a trailing edge HK(i) as well as a rear member blade row with rear blades (i+1) having a leading edge VK(i+1) and a trailing edge HK(i+1) being provided,
- wherein the blade row group has two main flow path boundaries (HB),
- wherein the leading edge VK(i+1) of at least one blade (i+1) of the rear member blade row is provided in the vicinity of a blade (i) of the front member blade row (i),
- wherein the edges of the blades (i, i+1) of the blade row groups are viewed between a main flow path boundary (HB) and a mean meridional flow line (SLM) in the main flow path center,
- wherein, when viewing the blade row group in a plane established by the meridional direction (m) and by the circumferential coordinate (u) (meridional flow line section), the chord Se(i) of the front blade is defined as the tangent lying on the profile of the front blade (i) on the pressure side and the chord Se(i+1) of the rear blade is defined as the tangent lying on the profile of the rear blade (i+1) on the pressure side,
- wherein the stagger angle of the front blade lambda(i) and the stagger angle of the rear blade lambda(i+1) are defined as angles of inclination of the respective chord against the meridional direction (m),
- wherein the mean stagger angle lambdam is defined as the mean value of the stagger angles lambda(i) and lambda(i+1), in accordance with lambdam = (lambda(i) + lambda(i+1)) / 2,
- wherein an auxiliary coordinate system having a first, a second and a third coordinate direction (s, q, or) is provided, with the first coordinate direction (s) facing downstream at the angle lambdam against the meridional direction (m), the second coordinate direction (q), perpendicular to the first coordinate direction (s), facing away from the pressure side of the front blade (i), and the third coordinate direction (or) being perpendicular to the first coordinate direction (s) and to the second coordinate direction (q),
- wherein the degree of bulge WG of a blade edge is defined as the greatest ascertainable distance (d) between the respective blade edge itself and the straight connection of the blade edge points on the mean meridional flow line (SLM) and the main flow path boundary (HB) relative to the width dor measured perpendicular to the first coordinate direction (s) at the blade edge between the mean meridional flow line (SLM) and the main flow path boundary (HB), in accordance with WG = d / dor,
- wherein the blade edges VK(i), HK(i), VK(i+1) and HK(i+1) can each be associated with one edge type in a plurality of edge types that are defined by the curvature of the edge contour and/ or by the number of curvature changes and/ or by the degree of bulge,
- wherein a qualitative equality of two blade edges VK(i), HK(i), VK(i+1), HK(i+1) exists, when the blade edges are of the same edge type or after mirror inversion of one of the blade edges are of the same edge type,
**characterized in that**
a qualitative equality with regard to the edge type is provided in the area between the mean meridional flow line (SLM) and one of the main flow path boundaries (HB) in a view perpendicular to the first and perpendicular to the third coordinate direction (s, or) for at least two edges VK(i), HK(i), VK(i+1), HK(i+1) of the blade row group.

2. Blade row group in accordance with Claim 1, **characterized in that** the qualitative equality of the at least two blade edges VK(i), HK(i), VK(i+1), HK(i+1) is provided at blade edges of different blade rows (i, i+1) of the blade row group.

3. Blade row group in accordance with one of the Claims 1 or 2, **characterized in that** the qualitative equality of the at least two blade edges VK(i), HK(i), VK(i+1), HK(i+1) is provided at the same blade row (i, i+1) of the blade row group.

4. Blade row group in accordance with Claim 3, **characterized in that** a qualitative equality is provided for the blade edges VK(i) and HK(i) of the front blade (i).

5. Blade row group in accordance with one of the preceding Claims, **characterized in that** the qualitative equality is provided at at least three blade edges VK(i), HK(i), VK(i+1), HK(i+1) of a front blade (i) and of a rear blade (i+1) of the blade row group.

6. Blade row group in accordance with one of the preceding Claims, **characterized in that** the qualitative equality is provided at all four blade edges VK(i), HK(i), VK(i+1), HK(i+1) of a front blade (i) and of a rear blade (i+1) of the blade row group.

7. Blade row group in accordance with one of the preceding Claims, **characterized in that** a unidirectional qualitative equality of the respective blade edges VK(i), HK(i), VK(i+1), HK(i+1) is provided, i.e. the blade edges VK(i), HK(i), VK(i+1) and HK(i+1) are of the same edge type.

8. Blade row group in accordance with one of the preceding Claims, **characterized in that** at at least one of the blade edges VK(i), HK(i), VK(i+1), HK(i+1) a curvature change point is provided in the area between the quarter meridional flow line (SLQ) and the main flow path boundary (HB).

9. Blade row group in accordance with one of the preceding Claims, **characterized in that** at at least one of the blade edges VK(i), HK(i), VK(i+1), HK(i+1) a curvature change point is provided in the area between the quarter meridional flow line (SLQ) and the mean meridional flow line (SLM).

10. Blade row group in accordance with Claim 8 or 9, **characterized in that** the curvature change point is provided closer to the quarter meridional flow line (SLQ).

11. Blade row group in accordance with one of the preceding Claims, **characterized in that** at least at both leading edges VK(i) and VK(i+1) of the front blade (i) and of the rear blade (i+1) a tilt angle of less than zero is provided, wherein the tilt angle (alpha) of a blade edge is measured between the straight connection of the blade edge points on the mean meridional flow line SLM and the main flow path boundary HB and an orthogonal on the quarter meridional flow line SLQ, and is counted positively clockwise when viewing the blade row group with a throughflow from left to right and the main flow path boundary HB being the lower limit.

12. Blade row group in accordance with one of the preceding Claims, **characterized in that** at least at both trailing edges HK(i) and HK(i+1) of the front blade (i) and of the rear blade (i+1) a tilt angle of less than zero is provided.

13. Blade row group in accordance with one of the preceding Claims, **characterized in that** at least at both trailing edges HK(i) and HK(i+1) of the front blade (i) and of the rear blade (i+1) a tilt angle greater than zero is provided.

14. Blade row group in accordance with one of the preceding Claims, **characterized in that** the following edge types are defined:
- Edge type A: a substantially linear course with a very small degree of bulge of WG < 0.003 is provided,
- Edge type B: a slightly curved course with a small degree of bulge of 0.003 < WG < 0.01 is provided,
- Edge type C: a partially curved course is provided, without curvature change and with a degree of bulge of WG > 0.01 as well as with a section having a concave curvature in the upstream direction,
- Edge type D: a partially curved course is provided, without curvature change and with a degree of bulge of WG > 0.01 as well as with a section having a convex curvature in the upstream direction,
- Edge type E: a partially curved course is provided, with a curvature change and with a degree of bulge of WG > 0.01 as well as with a section having a concave curvature in the upstream direction between the curvature change point and the main flow path boundary (HB),
- Edge type F: a partially curved course is provided, with a curvature change and with a degree of bulge of WG > 0.01 as well as with a section having a convex curvature in the upstream direction between the curvature change point and the main flow path boundary (HB),
- Edge type G: a partially curved course is provided, with two curvature changes and with a degree of bulge of WG > 0.01 as well as with a section having a concave curvature in the upstream direction between the two curvature change points, and
- Edge type H: a partially curved course is provided, with two curvature changes and with a degree of bulge of WG > 0.01 as well as with a section having a convex curvature in the upstream direction between the two curvature change points.

## Revendications

1. Groupe de rangées d'aubes pouvant être disposé dans un chemin d'écoulement principal d'une turbomachine et constitué de N rangées d'aubes membres adjacentes et disposées fixement les unes par rapport aux autres à la fois dans la direction méridionale (m) et dans la direction périphérique (u), le nombre N des rangées d'aubes membres étant supérieur ou égal à 2 et (i) caractérisant l'indice courant avec des valeurs comprises entre 1 et N, une rangée d'aubes membres avant avec des aubes avant (i) avec un bord d'attaque VK(i) et un bord de fuite HK(i) ainsi qu'une rangée d'aubes membres arrière avec des aubes arrière (i+1) avec un bord d'attaque VK(i+1) et un bord de fuite HK(i+1) étant données,
- le groupe de rangées d'aubes présentant deux bordures de chemin d'écoulement principal (HB),
- le bord d'attaque VK(i+1) d'au moins une aube (i+1) de la rangée d'aubes membres arrière étant prévu dans l'environnement d'une aube (i) de la rangée d'aubes membres avant (i),
- les bords des aubes (i, i+1) des groupes de rangées d'aubes étant considérés entre une bordure de chemin d'écoulement principal (HB) et une ligne d'écoulement méridionale médiane (SLM) au milieu du chemin d'écoulement principal,
- en considérant le groupe de rangées d'aubes dans un plan (coupe linéaire d'écoulement méridionale) formé par la direction méridionale (m) et les coordonnées périphériques (u), la corde de l'aube avant Se(i) étant définie comme la tangente au profil côté pression de l'aube avant (i) et la corde de l'aube arrière Se(i+1) étant définie comme la tangente au profil côté pression de l'aube arrière (i+1),
- l'angle d'échelonnement de l'aube avant lambda(i) et l'angle d'échelonnement de l'aube arrière lambda(i+1) étant définis en tant qu'angle d'inclinaison de la corde respective par rapport à la direction méridionale (m),
- l'angle d'échelonnement moyen lambdam étant défini comme valeur moyenne des angles d'échelonnement lambda(i) et lambda(i+1), avec lambdam = (lambda(i) + lambda(i+1))/2,
- un système de coordonnées auxiliaire avec une première, une deuxième et une troisième direction de coordonnées (s, q, or) étant donné, la première direction de coordonnées (s) étant orientée vers l'aval suivant l'angle lambdam par rapport à la direction méridionale (m), la deuxième direction de coordonnées (q) étant orientée perpendiculairement à la première direction de coordonnées (s) en s'éloignant du côté pression de l'aube avant (i), et la troisième direction de coordonnées (or) perpendiculaire à la première direction de coordonnées (s) et à la deuxième direction de coordonnées (q),
- le degré de courbure WG d'un bord d'aube étant défini comme la distance (d) maximale pouvant être établie entre le bord d'aube concerné lui-même et la liaison droite des points du bord d'aube sur la ligne d'écoulement méridionale médiane (SLM) et sur la bordure de chemin d'écoulement principal (HB), par rapport à la largeur dor mesurée perpendiculairement à la première direction de coordonnées (s) au niveau du bord d'aube entre la ligne d'écoulement méridionale médiane (SLM) et la bordure de chemin d'écoulement principal (HB), selon WG = d/dor,
- les bords d'aubes VK(i), HK(i), VK(i+1) et HK(i+1) pouvant être associés à chaque fois à l'un parmi une pluralité de types de bords, qui sont définis par la courbure de l'allure du bord et/ou par le nombre de changements de courbure et/ou le degré de courbure,
- une égalité qualitative de deux bords d'aubes VK(i), HK(i), VK(i+1), HK(i+1) étant donnée lorsque les bords d'aubes sont du même type de bord ou sont du même type de bord suivant une symétrie miroir de l'un des bords d'aubes,
**caractérisé en ce que**
dans la région entre la ligne d'écoulement méridionale médiane (SLM) et l'une des bordures de chemin d'écoulement principal (HB), dans une vue perpendiculaire à la première et à la troisième direction de coordonnées (s, or) pour au moins deux bords VK(i), HK(i), VK(i+1), HK(i+1) du groupe de rangées d'aubes, une égalité qualitative par rapport à leur type de bord est prévue.

2. Groupe de rangées d'aubes selon la revendication 1, **caractérisé en ce que** l'égalité qualitative des au moins deux bords d'aubes VK(i), HK(i), VK(i+1), HK(i+1) est prévue au niveau de bords d'aubes de rangées d'aubes différentes (i, i+1) du groupe de rangées d'aubes.

3. Groupe de rangées d'aubes selon l'une quelconque des revendications 1 et 2, **caractérisé en ce que** l'égalité qualitative des au moins deux bords d'aubes VK(i), HK(i), VK(i+1), HK(i+1) est prévue au niveau de la même rangée d'aubes (i, i+1) du groupe de rangées d'aubes.

4. Groupe de rangées d'aubes selon la revendication 3, **caractérisé en ce qu'**il est prévu une égalité qualitative pour les bords d'aubes VK(i) et HK(i) de l'aube avant (i).

5. Groupe de rangées d'aubes selon l'une quelconque des revendications précédentes, **caractérisé en ce que** l'égalité qualitative est prévue au niveau d'au moins trois bords d'aubes VK(i), HK(i), VK(i+1), HK(i+1) d'une aube avant (i) et d'une aube arrière (i+1) du groupe de rangées d'aubes.

6. Groupe de rangées d'aubes selon l'une quelconque des revendications précédentes, **caractérisé en ce que** l'égalité qualitative est prévue au niveau de tous les quatre bords d'aubes VK(i), HK(i), VK(i+1), HK(i+1) d'une aube avant (i) et d'une aube arrière (i+1) du groupe de rangées d'aubes.

7. Groupe de rangées d'aubes selon l'une quelconque des revendications précédentes, **caractérisé en ce qu'**une égalité qualitative de même sens des bords d'aubes concernés VK(i), HK(i), VK(i+1), HK(i+1) est prévue, c'est-à-dire que les bords d'aubes VK(i), HK(i), VK(i+1) et HK(i+1) sont du même type de bord.

8. Groupe de rangées d'aubes selon l'une quelconque des revendications précédentes, **caractérisé en ce qu'**il est prévu au niveau d'au moins l'un des bords d'aubes VK(i), HK(i), VK(i+1), HK(i+1), un point de changement de courbure dans la région entre la ligne d'écoulement méridionale au niveau d'un quart (SLQ) et la bordure de chemin d'écoulement principal (HB).

9. Groupe de rangées d'aubes selon l'une quelconque des revendications précédentes, **caractérisé en ce qu'**il est prévu au niveau d'au moins l'un des bords d'aubes VK(i), HK(i), VK(i+1), HK(i+1), un point de changement de courbure dans la région entre la ligne d'écoulement méridionale au niveau d'un quart (SLQ) et la ligne d'écoulement méridionale médiane (SLM).

10. Groupe de rangées d'aubes selon la revendication 8 ou 9, **caractérisé en ce que** le point de changement de courbure est prévu plus près de la ligne d'écoulement méridionale au niveau d'un quart (SLQ).

11. Groupe de rangées d'aubes selon l'une quelconque des revendications précédentes, **caractérisé en ce qu'**il est prévu un angle de basculement inférieur à zéro au moins au niveau des deux bords d'attaque VK(i) et VK(i+1) de l'aube avant (i) et de l'aube arrière (i+1), l'angle de basculement (alpha) d'un bord d'aube étant mesuré entre la liaison droite des points du bord d'aube sur la ligne d'écoulement méridionale médiane (SLM) et sur la bordure de chemin d'écoulement principal (HB) et une perpendiculaire à la ligne d'écoulement méridionale au niveau d'un quart (SLQ) et étant compté comme positif en considérant le groupe de rangées d'aubes avec un écoulement de gauche à droite et la bordure de chemin d'écoulement principal (HB) en tant que limitation inférieure dans le sens des aiguilles d'une montre.

12. Groupe de rangées d'aubes selon l'une quelconque des revendications précédentes, **caractérisé en ce qu'**un angle de basculement inférieur à zéro est prévu au moins au niveau des deux bords de fuite HK(i) et HK(i+1) de l'aube avant (i) et de l'aube arrière (i+1) .

13. Groupe de rangées d'aubes selon l'une quelconque des revendications précédentes, **caractérisé en ce qu'**un angle de basculement supérieur à zéro est prévu au moins au niveau des deux bords de fuite HK(i) et HK(i+1) de l'aube avant (i) et de l'aube arrière (i+1) .

14. Groupe de rangées d'aubes selon l'une quelconque des revendications précédentes, **caractérisé en ce que** l'on définit, en tant que types de bord :
- en tant que type de bord A : il existe une allure essentiellement linéaire avec un très petit degré de courbure de WG < 0,003 ;
- en tant que type de bord B : il existe une allure faiblement courbée avec un petit degré de courbure de 0,003 < WG < 0,01 ;
- en tant que type de bord C : il existe une allure partiellement courbée sans changement de courbure et avec un degré de courbure WG > 0,01 et avec une portion de courbure concave vers l'amont ;
- en tant que type de bord D : il existe une allure partiellement courbée sans changement de courbure et avec un degré de courbure WG > 0,01 et avec une portion de courbure convexe vers l'amont ;
- en tant que type de bord E : il existe une allure partiellement courbée avec un changement de courbure et avec un degré de courbure WG > 0,01 et avec une portion entre le point de changement de courbure et la bordure de chemin d'écoulement principal (HB), avec une courbure concave vers l'amont ;
- en tant que type de bord F : il existe une allure partiellement courbée avec un changement de courbure et avec un degré de courbure WG > 0,01 et avec une portion entre le point de changement de courbure et la bordure de chemin d'écoulement principal (HB), avec une courbure convexe vers l'amont ;
- en tant que type de bord G : il existe une allure partiellement courbée avec deux changements de courbure et avec un degré de courbure WG > 0,01 et avec une portion entre les deux points de changement de courbure avec une courbure concave vers l'amont ; et
- en tant que type de bord H : il existe une allure partiellement courbée avec deux changements de courbure et avec un degré de courbure WG > 0,01 et avec une portion entre les deux points de changement de courbure avec une courbure convexe vers l'amont.
